# EUROPÄISCHE PATENTSCHRIFT

(11) **EP 3 667 246 B1**
(45) Veröffentlichungstag und Bekanntmachung des Hinweises auf die Patenterteilung: **14.06.2023**
(21) Anmeldenummer: 19213384.1
(22) Anmeldetag: 04.12.2019
(51) Int. Cl.: G01D 4/00, G01D 9/00, G01D 21/00, H04Q 9/00, H04W 4/38, H04W 56/00

(54) **VERFAHREN ZUM SAMMELN VON DATEN SOWIE SENSOR, DATENSAMMLER UND VERSORGUNGSNETZ**
METHOD FOR COLLECTING DATA AND SENSOR, DATA COLLECTOR AND SUPPLY NETWORK
PROCÉDÉ DE COLLECTE DES DONNÉES AINSI QUE CAPTEUR, COLLECTEUR DE DONNÉES ET RÉSEAU D'ALIMENTATION

(30) Priorität: 14.12.2018 DE 102018009818
(43) Veröffentlichungstag der Anmeldung: 17.06.2020
(73) Patentinhaber: Diehl Metering Systems GmbH, 90451 Nürnberg (DE); DIEHL METERING SAS, 68304 Saint Louis (FR)
(72) Erfinder: Schmidt, Achim, 91367 Weißenohe (DE); Kauppert, Thomas, 90455 Nürnberg (DE); Joppich-Dohlus, Petra, 91080 Rathsberg (DE); Schmitz, Stefan, 90455 Nürnberg (DE); Sosna, Christoph, 90429 Nürnberg (DE); Bach, Guy, 68640 Waldighofen (FR); Breton, Aster, 05350 Saint Véran (FR); Gottschalk, Klaus, 90610 Winkelhaid (DE)
(74) Vertreter: Diehl Patentabteilung

(56) Entgegenhaltungen:
- US-A1- 2011 004 445
- US-A1- 2013 285 834
- US-A1- 2014 191 881

## Beschreibung

Die vorliegende Erfindung betrifft zum einen ein Verfahren zum Sammeln von Daten gemäß dem Oberbegriff des Anspruchs 1, einen Sensor gemäß dem Oberbegriff des Anspruchs 25 sowie ein Versorgungsnetz gemäß dem Oberbegriff des Anspruchs 26.

### Technologischer Hintergrund

Verbrauchszähler sind Bestandteil von Versorgungsnetzen zur Verteilung von Verbrauchsgütern, wie z.B. Gas, Wasser, Wärme oder Elektrizität, und dienen dazu Verbrauchsdaten zu generieren. Verbrauchsdaten werden auf der Basis von von einem Messelement eines Sensors gelieferten Rohmessdaten von einem zählerseitigen Mikroprozessor errechnet und über ein Kommunikationssystem in Form eines BUS-Systems, insbesondere eines sogenannten M-BUS-Systems an eine zentrale Datenverwaltung (Head-End-System) weitergeleitet. Bei den Daten handelt es sich vor allem um den aktuellen Verbrauch, d.h. den Zählerstand.

Hierbei werden Rohmessdaten von dem Messelement eines Sensors des Verbrauchszählers zu vorbestimmten vorgegebenen Zeitpunkten generiert, von einem Mikroprozessor des Verbrauchszählers ausgewertet d. h. in Verbrauchsdaten umgerechnet und die daraus resultierenden Verbrauchsdaten anschließend über eine primäre Kommunikationsstrecke von einer Lese- bzw. Empfangseinrichtung (M-BUS-Master bzw. Konzentrator oder Datensammler) zu festgelegten Zeitpunkten an den einzelnen lokal angeordneten Verbrauchszähler abgefragt. Anschließend werden die Verbrauchsdaten von der Lese- bzw. Empfangseinrichtung über eine tertiäre Kommunikationsstrecke, beispielsweise auf Basis von LAN, GPRS, 3G, LTE, weiter zu einem Head-End-System übertragen. Die Verbrauchsdaten können dann im Head-End angezeigt oder zur Rechnungsstellung verwendet werden. Die bisherige Konzeption der Verbrauchsdatenerfassung ist sowohl in ihrer Informationstiefe als auch in ihrem Informationsumfang begrenzt.

### Druckschriftlicher Stand der Technik

Die US 2013/285834 A1 beschreibt ein Verfahren zum Erhalt von genauen, momentanen elektrischen Verbrauchsdaten für Telemetrie Zwecke. Die Daten sollen innerhalb einiger weniger Sekunden mit hoher Auflösung übertragen werden. Pulse werden zusammen mit einem Zeitstempel übertragen, wobei der jeweiligen Puls-bezogene Zeitstempel an dem nachziehenden Ende des jeweiligen Pulses erzeugt wird. Die Übertragung der mit Zeitstempel versehenen Pulse soll permanent in einem fest vorgegebenen Zeitraster von wenigen Sekunden erfolgen.

In der US 2011/004445 A1 wird ein System zum Übertragen von Daten für die Fernprotokollierung zwischen einem Messfühler mit einer elektronischen Schaltung mit nicht synchronisiertem internem Taktgeber und einem Speicher zum Speichern von gemessenen Werten und einem Sender zum Übertragen der gemessenen Werte, und einem mit einer Referenzzeitbasis synchronisierten Empfänger zum Sammeln der übertragenen Messwerte. Der Sensor bestimmt die Zeitdifferenz zwischen den Sende- und Messzeitpunkten in Abhängigkeit von der internen Uhr des Sensors und sendet diese Zeitdifferenz mit den gemessenen Werten. Der Empfänger subtrahiert vom Empfangszeitpunkt in Abhängigkeit von der Referenzzeitbasis die über den Sender gesendete Zeitdifferenz, um den gesendeten Messungen die Differenz als Datum zu geben.

Die US 2014/191881 A1 beschreibt ein Verfahren zur Fernauslesung von Flüssigkeitszählern, bei dem ein Zähler ein Modul mit einem Messtaktgeber und einem drahtlosen Sender zur Übertragung eines Datenframes von zeitgestempelten Fernausleseinformationen an einen Server umfasst, der einen Servertaktgeber umfasst. Nachdem alle N Datenframes übertragen wurden, tritt das Zählermodul in einen Empfangsmodus für eine Zeitdauer nach dem Empfang eines Datenframes von zeitgestempelten Informationen ein. Der Server bestimmt die Differenz zwischen den im empfangenen Rahmen enthaltenen Zeitinformationen und den vom Servertaktgeber gelieferten Zeitinformationen. Sofern die Differenz größer als ein vorbestimmter Grenzwert ist, sendet der Server eine Rücksetznachricht an den Zähler. Nach dem Empfang der Rücksetznachricht aktualisiert das Modul des Zählers den Zählertaktgeber.

### Aufgabe der vorliegenden Erfindung

Die Aufgabe der vorliegenden Erfindung besteht darin, ein gattungsgemäßes Verfahren zum Sammeln und/oder Weiterleiten von Daten sowie einen hierfür einzusetzenden Sensor jeweils mit gesteigertem Informationsinhalt zur Verfügung zu stellen.

### Lösung der Aufgabe

Die vorstehende Aufgabe wird durch die Merkmale des Anspruchs 1 gelöst, durch einen Sensor gemäß Anspruch 25 sowie durch ein Versorgungsnetz gemäß Anspruch 26. Zweckmäßige Ausgestaltungen des erfindungsgemäßen Verfahrens werden in den abhängigen Ansprüchen beansprucht.

Erfindungsgemäß ist ein Verfahren zum Sammeln von Daten vorgesehen, vorzugsweise Daten in Zusammenhang mit einem Verbrauch, einem physikalischen oder physikalisch-chemischen Parameter und/oder einem Betriebszustand im Rahmen eines Betriebs eines lokalen Sensors, vorzugsweise eines Sensors für einen Verbrauchszähler, als Bestandteil eines mindestens einen lokalen Sensor vorzugsweise eine Mehrzahl von lokalen Sensoren umfassendes Versorgungsnetzes zur Verteilung eines Verbrauchsguts, wobei der Sensor ein Messelement enthält, das Messelement des jeweiligen Sensors elementare Messeinheiten, die mindestens einer physikalischen oder physikalisch-chemischen Größe oder mindestens eines physikalischen oder physikalisch-chemischen Parameters entsprechen, als Rohmessdaten liefert, und der Sensor Funk-Kommunikationsmittel sowie Speichermittel umfasst, dadurch gekennzeichnet, dass zur Festlegung der Messauflösung des Sensors die Bedingungen für ein Generieren von Zeitstempelungen unter Anwendung eines Korrelierungsmodells vorher festgelegt werden, auf der Basis des Korrelierungsmodells Zeitstempelungen von aufeinanderfolgenden Rohmessdaten in dem Sensor generiert werden, die Zeitstempelungen über eine drahtgebundene Verbindung und/oder über eine Funkstrecke übertragen werden, so dass auf Basis der Zeitstempelungen unter Anwendung des Korrelierungsmodells die vom Messelement erfassten Rohmessdaten rekonstruiert und ausgewertet werden, wobei der zeitliche Versatz zwischen einem Sensor und einem Empfänger korrigiert wird, indem zur Kompensation des zeitlichen Versatzes Telegramme gesendet werden.

Erfindungsgemäß werden zur Festlegung der Messauflösung des Sensors die Bedingungen für ein Generieren von Zeitstempelungen unter Anwendung eines Korrelierungsmodells vorher festgelegt. Auf der Basis des Korrelierungsmodells werden Zeitstempelungen von aufeinanderfolgenden Rohmessdaten in dem Sensor generiert und in den Speichermitteln abgelegt. Anschließend werden lediglich die den erfassten Rohmessdaten zugeordneten Zeitstempelungen über die primäre Kommunikationsstrecke übertragen, so dass auf Basis der bei dem Master ankommenden Zeitstempelungen unter Anwendung des Korrelierungsmodells die vom Messelement erfassten Rohmessdaten nach erfolgter Übertragung wieder rekonstruiert und ausgewertet werden können. Hierdurch entfallen rechenaufwendige und deshalb energieintensive Rechenoperationen im Bereich des lokalen Sensors. Rechenaufwendige und energieintensive Rechenoperationen können somit in den Bereich des Masters oder eines Head-Ends verlagert werden. Das erfindungsgemäße Verfahren ermöglicht es, Zeitstempelungen von Rohmessdaten in einem fortlaufenden, vollständigen und konsistenten Zeitzusammenhang, also lückenlos, insbesondere im Bereich einer entfernten zentralen Verarbeitungsanlage bzw. einem Head-End-System bereitzustellen. Die aus den Zeitstempelungen rekonstruierten Rohmessdaten können dem Zeitverlauf kontinuierlich zugeordnet werden, d.h. bilden einen Realzeit-Verlauf ab, der diskontinuierliche Lücken oder Datenfehlzeiten ausschließt. Der gemäß dem erfindungsgemäßen Verfahren im Head-End erzeugte kontinuierliche Rohmessdatenstrom besitzt im Vergleich zu bisherigen Lösungen eine sehr viel höhere Auflösung über der kontinuierlichen Zeitachse. Die Erfindung ermöglicht es, neben z. B. einer Verbrauchsberechnung eine viel größere Anzahl von Berechnungen und/oder Feststellungen und/oder Funktionen einschließlich "Business"-Funktionen beispielsweise im Head-End-System vornehmen zu können, als dies bisher möglich war. Aufgrund des erfindungsgemäßen Verfahrens kann zudem der Aufbau des Sensors wesentlich einfacher und kostengünstiger sein, da komplexe Mikroprozessoren für Berechnungen, wie z. B. zur Berechnung der Durchflussmenge, wegfallen. Aufgrund des erfassten zeitlichen Zusammenhangs der Rohmessdaten können Manipulationen vermieden werden, da die Messergebnisse über deren gesamten zeitlichen Verlauf mit empirischen Werten über die gesamte Zeitachse verglichen werden können. Ferner ist der Energieverbrauch der Baugruppe aus Sensor und der Zeitstempelaufbereitung bzw. den Kommunikationsmitteln wegen des Wegfalls von energieintensiver Rechenleistung wesentlich geringer als bei bisherigen Ausführungen, welche die Daten lokal auswerten. Bei den Zeitstempelungen kann es sich um Zeitpunkte oder Zeitdifferenzen handeln. Die Zeitpunkte oder Zeitdifferenzen können Ist-Zeitdaten oder Realzeitdaten sein oder zumindest daran orientiert sein. Die Zeitdifferenzen können von Zeitstempelung zu Zeitstempelung und/oder von einem fest vorgegebenen Zeitpunkt aus gebildet sein.

Vorteilhafterweise können durch das Senden von Telegrammen zur Kompensation des zeitlichen Versatzes zwischen einem Sensor bzw. Verbrauchszähler und einem Empfänger der zeitliche Versatz korrigiert werden. Bei dem Empfänger handelt es sich erfindungsgemäß um einen Datensammler oder optional ein Head-End-System. Der Verbrauchszähler und der Empfänger können über unterschiedliche Zeitgeber verfügen, so dass sie eine unterschiedliche Zeitbasis aufweisen. Der zeitliche Versatz dieser Zeitbasen wird durch das Senden von Telegrammen kompensiert. Beim Zeitversatz kann es sich um den momentanen zeitlichen Unterschied zwischen dem Zeitgeber des Sensors bzw. des Verbrauchszählers und dem Empfänger, wie beispielsweise einem Datensammler und/oder Head-End, handeln. Der zeitliche Drift kann die zeitliche Änderung des Zeitversatzes beschreiben, sofern der Zeitversatz nicht zeitlich konstant ist. Da die Verwertbarkeit der Zeitstempelungen von der jeweiligen Zeitbasis abhängig ist, ist die Kompensation des zeitlichen Versatzes zwischen Sensor bzw. Verbrauchszähler und Empfänger von sehr großer Wichtigkeit. Eine höhere Granularität der rekonstruierten Rohmessdaten erlaubt umfangreichere Anwendungs- bzw. Verwertungsmöglichkeiten, wie beispielsweise die vorausschauende Wartung und/oder Netzwerk-Management. Insbesondere in einem unidirektionalen Sensor-Netzwerk, welches mehrere unabhängige Zeitgeber und damit Zeitbasen aufweist, ist ein Verfahren zur Kompensation des zeitlichen Versatzes unerlässlich. Da in einem unidirektionalen Sensor-Netzwerk kein Downlink vom Empfänger zum Sensor bzw. Verbrauchszähler vorgesehen ist, kann der Zeitgeber im Sensor bzw. im Verbrauchszähler nicht an eine Standardzeit angepasst werden.

Erfindungsgemäß stehen der oder die lokalen Sensoren über eine primäre Kommunikationsstrecke mit einem Datensammler in Verbindung, ist zwischen dem Datensammler und einem Head-End eine tertiäre Kommunikationsstrecke vorgesehen und werden die von Sensoren und/oder von Verbrauchszählern übertragenen Zeitstempelungen im Datensammler und/oder im Head-End gesammelt, gespeichert und/oder ausgewertet. Die Übertragung der Zeitstempelungen über die primäre und tertiäre Kommunikationsstrecke ermöglicht es, eine erheblich größere Anzahl von Berechnungen und/oder Feststellungen und/oder Funktionen einschließlich "Business"-Funktionen im Head-End, wo genügend Rechenleistung zur Verfügung steht, vornehmen zu können als bisher.

Bei dem Korrelierungsmodell kann ein bestimmter Wert oder eine bestimmte Wertänderung oder eine bestimmte Wertdifferenz der mindestens einen physikalischen oder physikalisch-chemischen Größe oder des mindestens einen physikalischen oder physikalisch-chemischen Parameters für die Zuordnung einer Zeitstempelung festgelegt werden, wobei bei einem Erfassen des bestimmten Werts oder der bestimmten Wertdifferenz oder der bestimmten Wertänderung durch das Messelement die Zeitstempelung ausgelöst, als solche in den Speichermitteln des Sensors abgespeichert und für die Übertragung bereitgestellt wird. Ändert sich der vom Sensor erfasste Wert nicht, wird keine Zeitstempelung erzeugt. Somit können typisch für das erfindungsgemäße Verfahren längere Zeiträume ohne Zeitstempelung verstreichen. Es müssen somit nicht ständig Daten übertragen werden. Dennoch besitzt das Verfahren eine sehr hohe Auflösung.

Insbesondere können im Rahmen des Korrelierungsmodells ein schrittweise oder inkrementell sich erhöhender Zählerstand und/oder eine Wertetabelle mittels Zeitstempelungen abgebildet werden.

Vorzugsweise sind die Zeitstempelungen mit einem Vorzeichen, z.B. Plus- oder Minusvorzeichen, versehen. Dies ist vor allem bei der Abbildung einer Wertetabelle von Vorteil, da hierdurch festgelegt wird, ob die konkrete Zeitstempelung einen aufsteigenden oder absteigenden Wert der Wertetabelle betrifft.

Gemäß der Erfindung werden eine Mehrzahl von Zeitstempelungen entlang der primären Kommunikationsstrecke jeweils als Datenpaket übertragen.

Vorteilhafterweise kann auf Basis der beim Datensammler und/oder beim Head-End ankommenden Zeitstempelungen unter Anwendung des Korrelierungsmodells ein Rohmessdatenstrom generiert werden. Bei den betreffenden aufeinanderfolgenden Zeitstempelungen handelt es sich insbesondere um keine Berechnungen und/oder Auswertungen.

Zweckmäßigerweise können die Telegramme zur Kompensation des zeitlichen Versatzes durchnummeriert werden. Dadurch kann auf einfache Weise ein Telegramm zur Kompensation des zeitlichen Versatzes identifiziert werden, welches beispielsweise nicht zählerspezifisch am Empfänger registriert wurde. Es kann beispielsweise ein systemweiter Schlüssel zur Durchnummerierung der Telegramme verwendet werden, so dass jede vergebene Nummer einem Sensor bzw. Verbrauchszähler spezifisch zugeordnet werden kann. Somit können fehlende Telegramme zur Kompensation des zeitlichen Versatzes berücksichtigt werden und die chronologische Reihenfolge gewährleistet werden.

Vorteilhafterweise kann durch die Empfangszeit der Telegramme zur Kompensation des zeitlichen Versatzes ein Fehlerwert berechnet werden. Beispielsweise kann die am Empfänger erwartete Empfangszeit eines Telegramms zur Kompensation des zeitlichen Versatzes von der tatsächlichen Empfangszeit abweichen. Aufgrund dieser Abweichung kann ein Fehlerwert zwischen dem Zeitgeber im Sensor bzw. im Verbrauchszähler und dem Zeitgeber des Empfängers berechnet werden.

Zweckmäßigerweise kann die Periodizität der Telegramme zur Kompensation des zeitlichen Versatzes bekannt sein und darauf basierend der Fehlerwert berechnet werden. Sofern regelmäßig Telegramme zur Kompensation des zeitlichen Versatzes mit einer bekannten Periodizität vom Sensor bzw. Verbrauchszähler an den Empfänger gesendet werden, kann beispielsweise durch eine Abweichung der Periodizität am Empfänger ein zeitlicher Fehlerwert bzw. Korrekturwert berechnet werden.

Vorteilhafterweise können der Datensammler und/oder das Head-End die Telegramme zur Kompensation des zeitlichen Versatzes empfangen und einen zeitlichen Fehler basierend auf dem zeitlichen Abstand zwischen Telegrammen zur Kompensation des zeitlichen Versatzes ermitteln. Es kann zum einen der zeitliche Abstand zwischen empfangenen Telegrammen zur Kompensation des zeitlichen Versatzes mit einem festgelegten Wert für den zeitlichen Abstand verglichen werden. Dadurch kann ein momentaner Fehler zwischen dem Zeitgeber im Sensor bzw. im Verbrauchszähler und dem Zeitgeber im Datensammler und/oder Head-End bestimmt werden. Zum anderen kann eine Änderung des Fehlers zwischen dem festgelegten zeitlichen Abstand zwischen Telegrammen zur Kompensation des zeitlichen Versatzes und dem ermittelten zeitlichen Abstand bestimmt werden. Somit kann ein Auseinanderlaufen der Zeitgeber im Sensor bzw. im Verbrauchszähler und im Datensammler und/oder Head-End erkannt und kompensiert werden.

In einer Ausgestaltung der Erfindung können vorteilhafterweise die Daten-Telegramme der Zeitstempelungen asynchron zu den Telegrammen zur Kompensation des zeitlichen Versatzes vom Sensor bzw. vom Verbrauchszähler gesendet werden. Dadurch ist die Kompensation des zeitlichen Versatzes von der tatsächlichen Übertragung der Daten bzw. Rohmessdaten unabhängig und entkoppelt. Somit besteht die Möglichkeit, die Zeit-Kompensation im Hinblick auf das Prozessmanagement vom Übertragungskanal zu separieren. Da der zeitliche Versatz bzw. das zeitliche Driften normalerweise kontinuierlich auftritt und üblicherweise relativ langsam voranschreitet, kann die Kompensation des zeitlichen Versatzes relativ selten ausgeführt werden. Zudem kann damit eine gemeinsame Zeit-Kompensation für eine Mehrzahl an Datenübertragungskanäle, wie z. B. Protokollübertragung oder physischer Radiofrequenzkanal, verwendet werden.

Zweckmäßigerweise kann das zeitliche Sendeintervall der Telegramme zur Kompensation des zeitlichen Versatzes unterschiedlich sein zu dem zeitlichen Sendeintervall der Zeitstempelungen. Umso kleiner die zeitlichen Sendeintervalle der Telegramme zur Kompensation des zeitlichen Versatzes sind, umso stabiler und einfacher ist die Kompensation des zeitlichen Versatzes zwischen dem Zeitgeber des Sensors bzw. des Verbrauchszählers und dem Zeitgeber des Empfängers. Die Zeitstempelungen können beispielsweise in gebündelten Paketen versendet werden, so dass deren zeitliches Sendeintervall größer ist als das Sendeintervall der Telegramme zur Kompensation des zeitlichen Versatzes.

Es besteht die Möglichkeit, dass die Zeitstempelungen zusammen mit den Telegrammen zur Kompensation des zeitlichen Versatzes vom Datensammler an das Head-End gesendet werden. Sofern die Auswertung der Telegramme zur Kompensation des zeitlichen Versatzes nicht bereits im Datensammler vorgenommen wird, können beispielsweise die Telegramme zur Kompensation des zeitlichen Versatzes zusammen mit den Zeitstempelungen an das Head-End gesendet werden. Der Datensammler und das Head-End verfügen für gewöhnlich über einen Zeitgeber, welcher durch eine Standardzeit, wie die koordinierte Weltzeit (UTC), festgelegt wird. Für das Verfahren ist es somit unerheblich, an welcher Stelle im Sensor-Netzwerk die Kompensation des zeitlichen Versatzes der Zeitgeber stattfindet.

Zweckmäßigerweise können der Datensammler und/oder das Head-End die Telegramme zur Kompensation des zeitlichen Versatzes einer Vielzahl von Sensoren bzw. von Verbrauchszählern koordinieren und gemäß den individuellen zeitlichen Fehlerwerten ordnen. In einem Sensor-Netzwerk sendet beispielsweise eine Vielzahl an Sensoren und/oder Verbrauchszählern Telegramme zur Kompensation des zeitlichen Versatzes an den entsprechenden Datensammler. Der Datensammler kann die empfangenen Telegramme zur Kompensation des zeitlichen Versatzes entweder selbst koordinieren oder zur Weiterverarbeitung an das Head-End senden. Die Koordinierung kann das Zuordnen der Telegramme zur Kompensation des zeitlichen Versatzes zu den individuellen Sensoren bzw. Verbrauchszählern umfassen. Dadurch besteht z. B. die Möglichkeit die für jeden Sensor bzw. Verbrauchszähler individuellen zeitlichen Fehlerwerte zu bestimmen.

Eine Ausgestaltung der Erfindung sieht es vor, dass die Zeitstempelungen zusammen mit den Telegrammen zur Kompensation des zeitlichen Versatzes vom Sensor bzw. Verbrauchszähler gesendet werden. Es besteht weiter die Möglichkeit, dass die Zeitinformation des Sensors bzw. des Verbrauchszählers zur Kompensation des zeitlichen Versatzes im standardmäßigen Datentelegramm für die Zeitstempelungen vom Verbrauchszähler an einen Empfänger mitgesendet werden. Es sind somit keine dedizierten Telegramme zur Kompensation des zeitlichen Versatzes notwendig. Es kann dadurch zweckmäßigerweise auf separate Sendungen von Telegrammen zur Kompensation des zeitlichen Versatzes verzichtet werden. Allein durch die Datentelegramme, welche die Zeitstempelungen beinhalten, wird der Zeitversatz und/oder der zeitliche Drift zwischen dem Zeitgeber im Sensor bzw. im Verbrauchszähler und dem Zeitgeber im Empfänger berechnet. Der Zeitversatz kann in der Einheit [Δt] = s und der zeitliche Drift in der Einheit [Δt/t] = 1 angegeben werden.

Besonders vorteilhaft ist, dass der zeitliche Fehler zwischen dem Sensor bzw. dem Verbrauchszähler und einer Standardzeit auf Grundlage des Unterschieds zwischen dem Sendezeitpunkt eines Telegramms im Sensor bzw. im Verbrauchszähler und dem Empfangszeitpunkt dieses Telegramms im Empfänger, insbesondere im Datensammler und/oder im Head-End bestimmt wird. Hierfür kann die Annahme gemacht werden, dass der Sendezeitpunkt des Telegramms identisch ist mit dem Empfangszeitpunkt dieses Telegramms. Es kann somit davon ausgegangen werden, dass zwischen dem Senden und dem Empfangen kein signifikanter zeitlicher Versatz auftritt. Im Sensor bzw. im Verbrauchszähler kann das Telegramm mit der Sendezeit des Sensors bzw. des Verbrauchszählers versehen werden, welche sich vom Zeitgeber des Sensors bzw. des Verbrauchszählers ableitet. Im Empfänger kann beim Empfang dieses Telegramms die mitgesendete Sendezeit des Sensors bzw. des Verbrauchszählers mit der Empfangszeit im Empfänger verglichen werden. Sofern kein Zeitversatz und/oder zeitlicher Drift zwischen Sensor bzw. Verbrauchszähler und Empfänger vorliegt, würde unter der oben beschriebenen Annahme die vom Sensor bzw. vom Verbrauchszähler gesendete Sendezeit mit der Empfangszeit im Empfänger übereinstimmen. Sofern die Sendezeit und Empfangszeit nicht identisch sind, kann daraus ein Zeitversatz und/oder zeitlicher Drift zwischen dem Zeitgeber des Sensors bzw. des Verbrauchszählers und dem Zeitgeber des Empfängers berechnet werden. Für diese Art der Kompensation des zeitlichen Versatzes ist es unerheblich, ob die Telegramme neben der Sendezeit zusätzlich Zeitstempelungen des Sensors bzw. des Verbrauchszählers beinhalten.

Vorzugsweise ist der rekonstruierte Rohmessdatenstrom in der Weiterfolge der Datenverarbeitung abgesehen von seiner zeitlichen Auflösung (Abtastrate oder Vielfaches der Abtastrate) jederzeit auf einer zeithistorischen Basis zeitlückenlos auswertbar. Daraus resultiert der Vorteil, dass z.B. auch in der Vergangenheit liegende ereignisbedingte Zustandsveränderungen im Versorgungsnetzwerk (wie z.B. Overflow, Underflow, Leckagen, Manipulationsversuche usw.) in genauer Zeitzuordnung und ohne Lücken feststellbar bzw. dokumentierbar sind. Durch eine hochgranulare zeitdiskrete Abtastung ist eine hohe Genauigkeit in der zeitlichen Auflösung gegeben. Ferner besteht die Möglichkeit, vergangene Verbrauchsdaten dem Verbraucher wesentlich genauer anzuzeigen und/oder bei Auswertungen hinsichtlich des Verbrauchsverhaltens bzw. Änderungen desselben besser miteinzubeziehen. Dies wiederum wirkt sich verbrauchsoptimierend aus und stellt für den Verbraucher eine besonders wichtige Information des Netzversorgers dar.

Bei den betreffenden aufeinanderfolgenden Rohmessdaten handelt es sich insbesondere um keine Berechnungen und/oder Auswertungen, sondern um elementare Messeinheiten.

Beispielsweise kann es sich bei elementaren Messeinheiten um die elektrische Spannung oder um die Stromstärke handeln, die gemessen werden. Beispielsweise kann die Ausgangsspannung eines Hallsensors im Falle seiner Anregung oder die Spannung eines Temperaturfühlers erfasst werden. Zweckmäßigerweise kann sich die gemessene physikalische Größe auf ein Versorgungsmedium, vorzugsweise Wasser, Strom, Treibstoff oder Gas, eines Versorgungsnetzes beziehen.

Es besteht die Möglichkeit, dass der oder einer der gemessene(n) physikalische(n) oder chemisch-physikalische(n) Parameter kennzeichnend ist für die Menge, die Qualität und/oder Zusammensetzung eines Fluids, das durch den betreffenden Sensor strömt oder von diesem kontaktiert wird.

Die elementare Messeinheit kann zweckmäßigerweise eine Zeitstempelung generieren, sobald die elementare Messeinheit einen Impuls empfängt.

Es besteht die Möglichkeit, dass der Rohmessdatenstrom eine zeitliche Auflösung besitzt, die durch die Sensor-Abtastrate bzw. Messelement-Abtastrate oder ein Vielfaches derselben festgelegt oder bedingt ist. Zweckmäßigerweise besitzt der Rohmessdatenstrom eine zeitliche Auflösung, die nur durch die Sensor-Abtastrate bzw. Messelement-Abtastrate oder ein Vielfaches derselben festgelegt oder zumindest bedingt ist. Die zeitliche Auflösung des Rohmessdatenstroms liegt vorzugsweise im Sekundenbereich, Zehntelsekundenbereich, Hundertstelsekundenbereich oder Tausendstelsekundenbereich.

Vorteilhafterweise ist der Rohmessdatenstrom unter Zugrundelegung der festgelegten Auflösung kontinuierlich und/oder vollständig. Daraus resultiert eine ganz besonders hohe Messwertauflösung entlang des kontinuierlichen Zeitverlaufs und daraus wiederum eine besondere Informationstiefe als Basis für darauf aufbauende Auswertungen bzw. Berechnungen.

Um den kontinuierlichen Rohmessdatenstrom zu erzeugen, werden die Daten-Pakete zweckmäßigerweise in einer entsprechenden Zeitabfolge-Referenz zusammengefügt oder zumindest zueinander in Relation gesetzt, sodass die in den Paketen enthaltenen Zeitstempelungen entlang der Realzeitachse entsprechend ihrer Abtastung und vorherigen Paketaufteilung später wieder zusammengefügt oder zumindest in eine fortlaufende zeitliche Relation zueinander gesetzt sind.

Die Festlegung der Frage, wann eine neue Datenübertragung in Form einer Nachricht oder eines Telegramms (eines oder mehrerer Datenpakete) durchzuführen ist, hängt erfindungsgemäß davon ab, ob mindestens die Bedingung b) der beiden Bedingungen
(a) Ablauf eines vorgegebenen Zeitintervalls und
(b) Erreichen einer vorgegebenen Menge an insbesondere komprimierten gesammelten Zeitstempelungen seit der vorherigen Übertragung
erfüllt ist. Aufgrund dessen kann eine Zeitabfolge-Referenz der zu übertragenden Daten-Pakete in einfacher Weise realisiert werden.

Besonders zweckmäßig ist, dass das Verfahren umfasst, die Zeitstempelungen durch Formatierung in Datenpaketen vorbestimmter fester Größe zu verpacken, wobei jedes Mal, wenn die akkumulierten Daten die Größe eines Datenpakets erreichen oder das vorgegebene Zeitintervall abgelaufen ist, eine neue Übertragung ausgelöst wird.

Es besteht die Möglichkeit, dass die Datenübertragung mit einer Redundanz durchgeführt wird. Zweckmäßigerweise kann die Redundanz in der Übertragung durch wiederholtes Senden desselben Datenpakets in mehreren aufeinanderfolgenden Übertragungsvorgängen oder auf unterschiedlichen Kommunikationswegen oder Funkkanälen erreicht werden. Es besteht ferner die Möglichkeit, dass die Redundanz in der Übertragung durch wiederholtes Senden derselben Zeitstempelungen erreicht wird. Beispielsweise kann die Übertragung eines Datenpakets oder einer Zeitstempelung fünf Mal wiederholt werden.

Vorteilhafterweise können die Zeitstempelungen komprimiert werden und die Komprimierung der Zeitstempelungen verlustfrei durchgeführt werden. Die Komprimierung der Zeitstempelungen kann im Bereich des Sensors bzw. des Verbrauchszählers verlustfrei durchgeführt werden. Die Übertragung der Zeitstempelungen kann zweckmäßigerweise in komprimierter Form und/oder über eine Funkstrecke erfolgen. Die Übertragung kann wiederholt und bedingt jeweils nach Ablauf eines vorgegebenen Zeitintervalls und/oder nach Erreichen einer vorgegebenen Menge an Zeitstempelungen, die seit einer vorherigen Übertragung angesammelt wurden, durchgeführt werden.

Alternativ kann die Komprimierung der Zeitstempelungen aber auch mit einem vorgegebenen, zulässigen Verlustniveau durchgeführt werden. Wird die Datenkomprimierung mit einem vorgegebenen zulässigen Verlustniveau durchgeführt, kann, wenn der Benutzer oder Betreiber eine Energieeinsparung bevorzugt und eine gewisse Ungenauigkeit bei der Wiederherstellung und Wiedergabe der ursprünglichen Messdaten akzeptiert (d.h. einen gewissen Verlust akzeptiert), das Komprimierungsverhältnis dann zum Nachteil einer geringeren Genauigkeit bei der Wiedergabe auf der Empfängerseite erhöht werden. Das Verlustverhältnis oder das Komprimierungsverhältnis kann als programmierbarer oder einstellbarer Parameter vorgesehen sein, der den Komprimierungsmodus bestimmt oder einstellt.

Als anschauliche und nicht beschränkende Beispiele für Datenkomprimierungsalgorithmen kann im Rahmen des erfindungsgemäßen Verfahrens in Betracht gezogen werden: eine differenzielle Komprimierung (Delta-Kodierung) in Verbindung mit einer Huffman-Kodierung, eine Lauflängenkodierung (RLE-Kodierung) oder vorzugsweise eine adaptive binäre arithmetische Kodierung (CABAC-Kodierung).

Nebengeordnet beansprucht die vorliegende Erfindung zudem einen Sensor, welcher hergerichtet ist für den lokalen Einsatz in einem eine Mehrzahl von lokalen Sensoren umfassenden Versorgungsnetz zur Verteilung eines Verbrauchsmediums, wie z.B. Wasser, Gas, Elektrizität, Treibstoff oder Wärme. Ein solcher Sensor kann Bestandteil eines Verbrauchszählers sein. Er ermöglicht es, im Rahmen des Betriebs eines Versorgungsnetzes den Verbrauch sowie weitere Zustandseigenschaften in sehr hoher Auflösung entlang des zeitlichen Verlaufs lückenlos und kontinuierlich zu gewährleisten.

Weiter beansprucht die vorliegende Erfindung zudem einen Datensammler. Der Datensammler kann vorteilhafterweise nach einem Verfahren gemäß mindestens einem der Verfahrensansprüche 1 bis 25 betrieben werden.

Schließlich betrifft die vorliegende Erfindung auch ein Versorgungsnetz zur Verteilung eines Verbrauchsmediums wie z.B. Gas, Wasser, Elektrizität, Treibstoff oder Wärme mit mindestens einem lokalen Sensor vorzugsweise einer Mehrzahl von lokalen Sensoren zum Generieren und/oder Weiterleiten von Zeitstempelungen aufgrund von Rohmessdaten auf der Basis des Korrelierungsmodells, vorzugsweise Rohmessdaten in Zusammenhang mit einem Verbrauch an Verbrauchsmedium und/oder einem Betriebszustand eines Verbrauchszählers, mit einem Datensammler, einer primären Kommunikationsstrecke zwischen dem jeweiligen Sensor und dem Datensammler, einem Head-End zur Auswertung der Daten sowie einer tertiären Kommunikationsstrecke zwischen Datensammler und Head-End. Gemäß der vorliegenden Erfindung ist das Versorgungsnetz dadurch gekennzeichnet, dass ein Sensor nach Anspruch 25 vorgesehen ist.

### Beschreibung der Erfindung anhand von Ausführungsbeispielen

Nachstehend wird die vorliegende Erfindung anhand verschiedener Ausführungsbeispiele näher erläutert. Es zeigen:
- Fig. 1: eine stark vereinfachte schematische Darstellung eines Beispiels von Kommunikationsstrecken eines Versorgungsnetzes zum Sammeln und/oder Weiterleiten von Daten, die von einer Vielzahl von Verbrauchszählern aufgenommen werden, an einen Datensammler und ein Head-End;
- Fig. 2: eine stark vereinfachte schematische Darstellungsweise eines Beispiels der Übertragung von Zeitstempelungen charakteristischer Rohmessdaten über die primäre Kommunikationsstrecke von Fig. 1 zum Datensammler;
- Fig. 3: ein Beispiel für eine Nachrichtenstruktur, die von der Messdatenaufbereitung des Verbrauchszählers gemäß Fig. 2 über die primäre Kommunikationsstrecke emittiert bzw. abgefragt wird;
- Fig. 4: ein Beispiel für ein Chronogramm von Zeitstempelungen von den von einem Sensor ausgelesenen Rohmessdaten zwischen zwei Uplink-Übertragungsvorgängen (Nachrichten oder Telegramme, die zu den Zeitpunkten T_{E-1} und T_{E} emittiert werden), in einem Kontext der Fernablesung des Volumenverbrauchs (in diesem Fall enthält das Paket PAⱼ N Zeitstempelungen);
- Fig. 5: ein Beispiel für das Zusammenfügen der die Zeitstempelungen enthaltenen Datenpakete bzw. Nachrichten bzw. Telegramme sowie Rekonstruktionen zu einem zeitkontinuierlichen Rohmessdatenstrom einschließlich dessen Auswertemöglichkeiten in stark vereinfachter schematischer Darstellungsweise;
- Fig. 6: ein Beispiel eines Sensors eines Verbrauchszählers in Form eines mechanischen Durchflusszählers mit einem Flügelrad, mit dem entsprechende Zeitstempelungen von Rohmessdaten für den Durchfluss erzeugt werden können;
- Fig. 7: ein Beispiel eines auf Korrelationsmodells zur Generierung von Zeitstempelungen auf Basis der von dem Sensor gemäß Fig. 6 erfassten Rohmessdaten;
- Fig. 8: ein Beispiel eines Temperatursensors in vereinfachter Darstellung;
- Fig. 9: ein weiteres Beispiel eines Korrelationsmodells zur Generierung von Zeitstempelungen auf Basis der von dem Sensor gemäß Fig. 8 erfassten Rohmessdaten;
- Fig. 10: eine stark vereinfachte schematische Darstellung der Netzwerkstruktur mit Sensorzeit und Standardzeit;
- Fig. 11: eine beispielhafte vereinfachte schematische Sequenz zur Kompensation des zeitlichen Versatzes zwischen Head-End, Datensammler und Sensor bzw. Verbrauchszähler; sowie
- Fig. 12: eine alternative beispielhafte vereinfachte schematische Sequenz zur Kompensation des zeitlichen Versatzes zwischen Head-End, Datensammler und Sensor bzw. Verbrauchszähler.

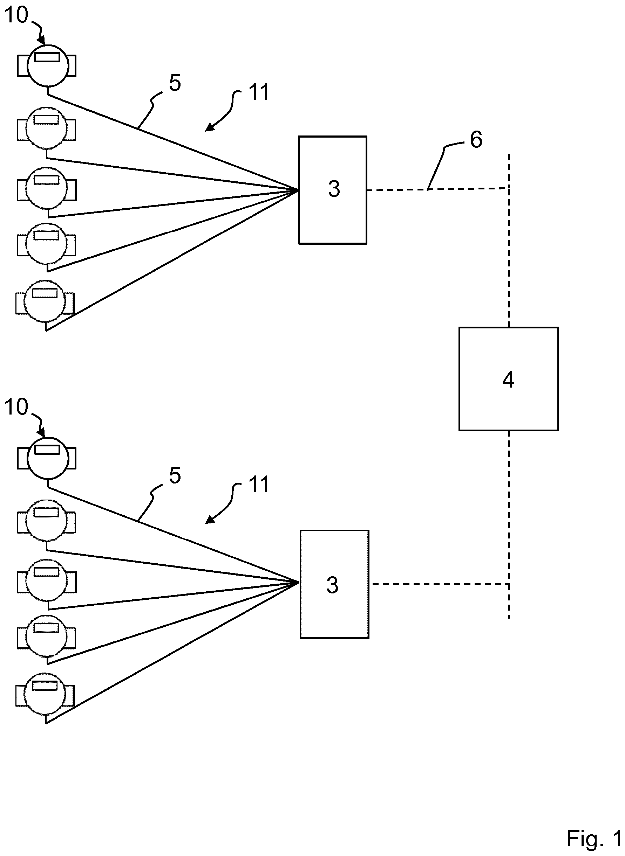

Fig. 1 zeigt ein Versorgungsnetz zur Verteilung von Verbrauchsmedien, wie z.B. Gas, Wasser, Elektrizität, Treibstoff oder Wärme. Das Versorgungsnetz umfasst eine Vielzahl von einzelnen lokalen Verbrauchszählern 10, die z.B. unterschiedlichen Wohneinheiten eines Mehrfamilienhauses zugeordnet sein können. Die einzelnen Verbrauchszähler 10, z. B. Wasserzähler, Wärmezähler, Elektrizitätszähler oder Gaszähler, sind über eine drahtlose Kommunikationsstrecke mit einem Datensammler 3, der als Master bzw. Konzentrator fungieren kann, verbunden.

Jeder einzelne Verbrauchszähler 10 kann zweckmäßigerweise mit einer zugehörigen ID (Adresse) versehen sein, sodass jeder einzelne Verbrauchszähler 10 vom Datensammler 3 direkt adressiert werden kann und die im jeweiligen Verbrauchszähler 10 vorhandenen Daten abgerufen werden können.

Die Übertragung über die primäre Kommunikationsstrecke 5 wird durch ein BUS-Übertragungsprotokoll vorgegeben, wie z.B. durch das wireless M-BUS-Übertragungsprotokoll.

Der jeweilige Datensammler 3 steht über eine sogenannte tertiäre Kommunikationsstrecke 6 mit einem sogenannten Head-End 4 in Verbindung. Im Head-End 4 laufen die Daten des gesamten Versorgungsnetzes zusammen. Bei der tertiären Kommunikationsstrecke 6 kann es sich um eine drahtgebundene Kommunikationsstrecke oder um eine auf Funktechnologie basierende Kommunikationsstrecke (z.B. Mobilfunk-Kommunikationsstrecke) handeln. Alternativ können die Daten des jeweiligen Datensammlers 3 bei Bedarf auch von einer portablen Leseeinrichtung ausgelesen und am Head-End 4 wieder eingelesen werden. Die Daten können entlang der tertiären Kommunikationsstrecke 6 auf unterschiedliche Art und Weise übertragen werden, beispielsweise via LAN, GPRS, LTE, 3G usw.

Die einzelnen Verbrauchszähler 10 können mit einer eigenständigen Energieversorgung (Akku) betrieben werden.

Wie in Fig. 1 schematisch dargestellt, werden die vorzugsweise komprimierten und formatierten Zeitstempelungen TS jedes betreffenden Sensors 1 bzw. Verbrauchszählers 10 an den Datensammler 3, der ein lokales Netzwerk einer Vielzahl von ihm zugeordneten Verbrauchszählern 10 bzw. Sensoren 1 verwaltet, übertragen. Von dem Datensammler 3 werden die vorzugsweise komprimierten und formatierten Zeitstempelungen TS jedes der Sensoren 1, die Teil des Versorgungsnetzes sind, an das Head-End 4 übertragen.

Der Datensammler 3 kann die von den jeweiligen Sensoren 1 bzw. Verbrauchszählern 10 abgerufenen Zeitstempelungen TS entweder über ein Zeitintervall (z.B. einen Tag) speichern und dann an einen Verarbeitungsstandort bzw. an das Head-End 4 weiterleiten. Alternativ können die Daten vom Datensammler 3 auch sofort an das Head-End 4 weitergeleitet werden.

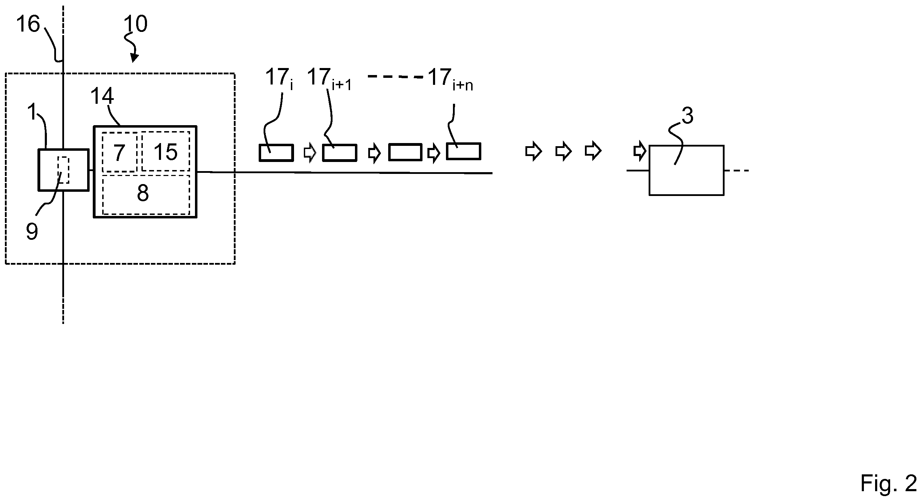

Gemäß Fig. 2 umfasst der jeweilige Verbrauchszähler 10 einen mit mindestens einem Messelement 9 ausgestatteten Sensor 1. Der Sensor 1 ist dazu vorgesehen, über das Messelement 9 Rohmessdaten zu erzeugen, die einer Messdatenaufbereitung 14 zugeführt werden. Die Rohmessdaten entsprechen vom Messelement 9 gelieferten elementaren Messeinheiten der mindestens einen physikalischen oder physikalisch-chemischen Größe oder des mindestens einen physikalischen oder physikalisch-chemischen Parameters. Bei den Rohmessdaten kann es sich beispielsweise um Rohdaten in Zusammenhang mit dem Durchfluss eines Mediums durch eine Versorgungsleitung 16, z.B. Wasserleitung, handeln, insbesondere die Durchflussmenge, die Trübung, das Vorhandensein von Schadstoffen oder das Vorhandensein eines festen und/oder gasförmigen Anteils bzw. fester und/oder gasförmiger Anteile.

Die Messwertaufbereitung 14 des Verbrauchszählers 10 umfasst Speichermittel 7, eine Zeitreferenzeinrichtung 15 (Quarz) sowie einen Mikroprozessor 8. Die vorgenannten Komponenten können getrennt oder als integrierte Gesamtkomponente vorgesehen sein. Der Verbrauchszähler 10 kann eine (nicht dargestellte) eigene Stromversorgung in Form einer Batterie oder dergleichen bei Bedarf umfassen. Somit kann der Verbrauchszähler 10 energieautark betrieben werden.

Im Vorfeld zu den in Fig. 2 dargestellten Schritten werden im Rahmen des Korrelierungsmodells ein bestimmter Wert, eine bestimmte Wertänderung oder eine bestimmte Wertdifferenz der mindestens einen physikalischen oder physikalisch-chemischen Größe oder des mindestens einen physikalischen oder physikalisch-chemischen Parameters für die Zuordnung einer Zeitstempelung TS festgelegt.

Erfindungsgemäß erfolgen im Bereich des jeweiligen Verbrauchszählers 10 folgende Schritte:
- Auslösen einer Zeitstempelung TS bei einem Erfassen des bestimmten Werts, der bestimmten Wertänderung oder der bestimmten Wertdifferenz durch das Messelement 9.
- Abspeichern der Zeitstempelungen TS in den Speichermitteln 7 des Sensors 1 bzw. des Verbrauchszählers 10.
- Übertragen der Zeitstempelungen TS, vorzugsweise in komprimierter Form, über eine Funkstrecke 11, indem in der Messdatenaufbereitung 14 Zeitstempelung-Telegramme 17ᵢ, 17ᵢ₊₁, 17ᵢ₊ₙ vorbereitet werden, die sukzessive an eine zentrale Verarbeitungsanlage, wie z. B. ein Head-End 4, übertragen werden.

Dementsprechend werden zeitlich nacheinander Datentelegramme 17ᵢ, 17ᵢ₊₁, ...., 17ᵢ₊ₙ übertragen, die fortlaufende Zeitstempelungen TS enthalten. Aus diesen Zeitstempelungen TS kann empfängerseitig unter Anwendung des Korrelierungsmodells ein kontinuierlicher lückenloser Rohmessdatenstrom von sehr hoher Auflösung rekonstruiert werden.

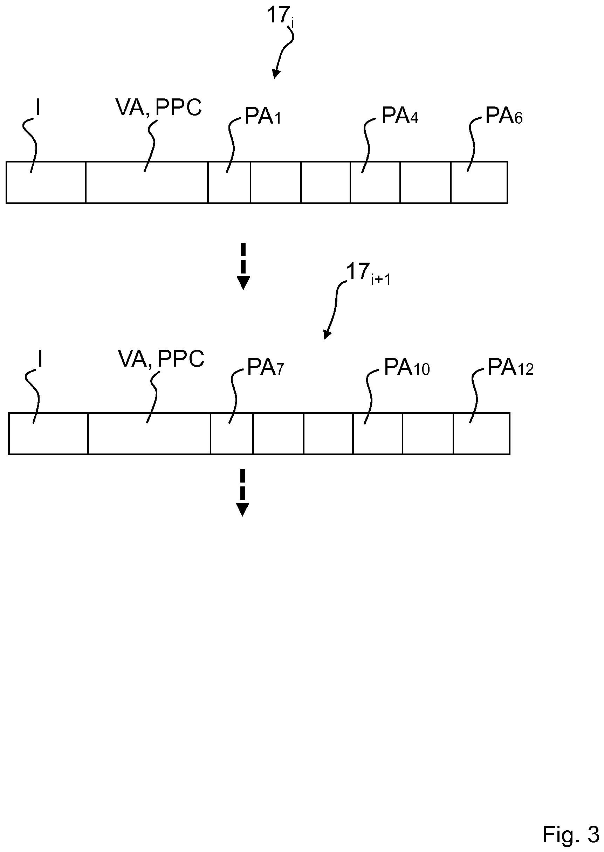

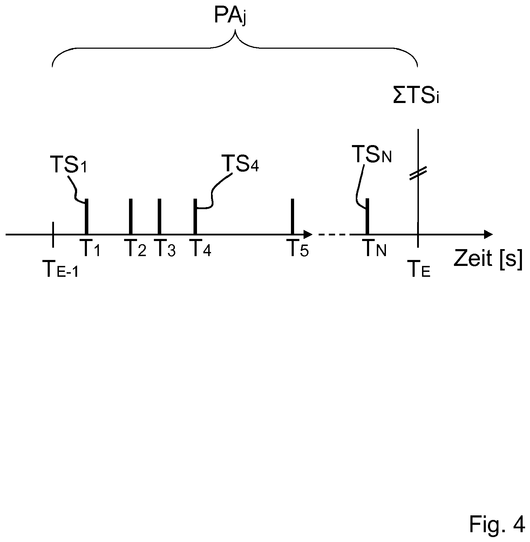

Wie in Figur 3 beispielhaft dargestellt, kann zudem vorgesehen sein, zusammen mit den PAⱼ-Paketen der Zeitstempelungen TS auch die Identität (Adresse) I des betreffenden Sensors 1 und/oder den absoluten oder kumulierten Wert VA der bzw. des vom betreffenden Sensor 1 gemessenen physikalischen oder physikalisch-chemischen Größe oder Parameters in dem jeweiligen Datentelegramm 17ᵢ, 17ᵢ₊₁, ...., 17ᵢ₊ₙ zu übertragen, wobei der Wert VA mit einem Zeitstempel versehen oder einem der elementaren zeitgestempelten Messdaten, beispielsweise einem Indexwert eines Fluidzählers zugeordnet sein kann. Der Wert VA kann - gemäß Ausführungsbeispiel - z. B. der Zählerstand eines Wasserzählers zu einem bestimmten Zeitpunkt oder die Durchflussmenge durch den Wasserzähler seit einer vorherigen Datenübertragung (z. B. entspricht die Summe ∑ der Zeitstempelungen TSᵢ der Summe ∑ der Durchflussmenge; siehe Figur 4) sein.

Das Verfahren kann auch darin bestehen, mit den PAⱼ-Paketen von Zeitstempelungen TS den Wert mindestens eines anderen physikalischen oder physikalisch-chemischen Parameters PPC der Umgebung des betreffenden Sensors 1 oder des von diesem letzteren gemessenen Fluids zu einem bestimmten Zeitpunkt auszulesen und zu übertragen, wie beispielsweise die Leitfähigkeit des Fluids, die Temperatur des Fluids, den pH-Wert des Fluids, den Druck des Fluids, und/oder einen Parameter, der für die Qualität und/oder die Zusammensetzung des Fluids und/oder die Temperatur der Einbauumgebung des Sensors 1 kennzeichnend ist.

Fig. 3 zeigt beispielhaft die einzelnen Datentelegramme 17ᵢ, 17ᵢ₊₁, ...., 17ᵢ₊ₙ gemäß Fig. 2 etwas detaillierter. Die Datentelegramme 17ᵢ, 17ᵢ₊₁, ...., 17ᵢ₊ₙ umfassen jeweils zum einen eine Mehrzahl von Datenpaketen PA₁-PA₆ bzw. PA₇-PA₁₂, den absoluten oder kumulierten Wert VA, die Identität (Adresse) I des betreffenden Sensors 1 sowie den Wert mindestens eines anderen physikalischen oder physikalisch-chemischen Parameters PPC der Umgebung des betreffenden Sensors 1 oder des von letzterem zu einem bestimmten Zeitpunkt gemessenen Fluids, wie z.B. die Leitfähigkeit des Fluids, die Temperatur des Fluids, den pH-Wert des Fluids, den Druck des Fluids, einen Parameter, der für die Qualität und/oder die Zusammensetzung des Fluids und/oder die Temperatur der Einbauumgebung des Sensors 1 kennzeichnend ist.

Wie in Fig. 3 weiterhin als Beispiel dargestellt ist, kann vorgesehen sein, die komprimierten Zeitstempelungen TS durch Formatierung der PAⱼ-Pakete, deren Größe einen vorgegebenen Maximalwert nicht überschreiten darf, zu verpacken, wobei jedes Mal, wenn die akkumulierten Daten die Größe eines Pakets PAⱼ erreichen, ein neues Paket bzw. Telegramm gebildet wird bzw. eine neue Übertragung ausgelöst wird, sofern das vorgegebene Zeitintervall nicht vorher abgelaufen ist.

Gemäß einer bevorzugten Variante der Erfindung werden die Zeitstempelungen TS vor deren Übertragung komprimiert. Die Komprimierung der Rohdaten kann verlustfrei durchgeführt werden.

Alternativ kann die Komprimierung der Zeitstempelungen TS auch mit einem vorgegebenen zulässigen Verlustniveau durchgeführt werden. In der Tat kann, wenn der Benutzer oder Betreiber eine Energieeinsparung bevorzugt und eine gewisse Ungenauigkeit bei der Wiederherstellung und Wiedergabe der ursprünglichen Rohmessdaten akzeptiert (d. h. einen gewissen Verlust akzeptiert), das Komprimierungsverhältnis dann zum Nachteil einer geringeren zeitlichen Genauigkeit bei der Wiedergabe auf der Empfangsseite erhöht werden. Dieses Verlustverhältnis oder das Komprimierungsverhältnis kann als programmierbarer oder einstellbarer Parameter vorgesehen werden, der den Komprimierungsmodus bestimmt oder einstellt.

Als anschauliche und nicht beschränkende Beispiele für Datenkomprimierungsalgorithmen kann im Rahmen des erfindungsgemäßen Verfahrens in Betracht gezogen werden, eine differentielle Kodierung (Delta-Kodierung) in Verbindung mit einer Huffman-Kodierung, eine Lauflängenkodierung (RLE-Kodierung) oder vorzugsweise eine adaptive binäre arithmetische Kodierung (CABAC-Kodierung) anzuwenden.

Es besteht die Möglichkeit, dass die Zeitstempelungen TS in den Speichermitteln 7 des Verbrauchszählers 10 erst dann gelöscht werden, wenn die Übertragung der Zeitstempelungen TS vom Empfänger bzw. Datensammler 3 bestätigt worden ist.

Dank der Erfindung ist es möglich, am Datensammler 3 bzw. Empfangsort (z. B. Head-End 4) über Informationen zu verfügen, die eine originalgetreue und vollständige Rekonstruktion aller von den verschiedenen Sensoren 1 gelieferten Zeitstempelungen TS in sehr hoher zeitlicher Auflösung ermöglichen und eine unbegrenzte Flexibilität bei der Auswertung dieser Daten zulassen. So kann man einfach und zentral die Erweiterungsfähigkeit von "Business"-Funktionen berücksichtigen, ohne die Funktionsweise oder gar den Aufbau von Baugruppen (Sensoren, Kommunikationsmittel, und dergleichen) zu beeinflussen.

Der Aufbau des Sensors 1 kann im Vergleich zu bisher bekannten Lösungen einfacher und sein Betrieb sicherer sein. Ferner ist der Energieverbrauch der Baugruppe aus dem Sensor 1 und den Kommunikationsmitteln 2 geringer als bei den aktuellen Ausführungen, welche die Daten lokal auswerten.

Die Erfindung kann auf die Messung und Fernauslesung verschiedenster Parameter und Größen angewendet werden. Es genügt, eine elementare (vom Sensor 1 messbare) Veränderung eines Parameters oder einer Größe in Übereinstimmung mit der Auflösung des betrachteten Sensors 1 genau datieren zu können (die Zeitstempelung TS kann der Auflösung des Sensors 1 oder möglicherweise einem Vielfachen dieser Auflösung entsprechen).

Wenn sich die gemessene Größe oder der gemessene Parameter auch dekrementell ändern kann, sind die Zeitstempelungen TS mit Vorzeichen versehene elementare Maßeinheiten (positive oder negative Einheiten).

Im Zusammenhang mit einer vorteilhaften Anwendung der Erfindung, verbunden mit dem Begriff des Verbrauchs, kann vorgesehen sein, dass die oder eine der gemessenen physikalischen Größe(n) sich auf ein Strömungsmedium bezieht, wobei jede Zeitstempelung TS einer elementaren Fluidmenge entspricht, die durch den Sensor 1, abhängig von seiner Messgenauigkeit, gemessen wird. Das gemessene Fluid kann beispielsweise Gas, Wasser, Kraftstoff oder eine chemische Substanz sein.

Alternativ oder kumulativ zu der oben genannten Ausführungsvariante kann die Erfindung auch vorsehen, dass die oder eine der gemessene(n) physikalisch-chemische(n) Größe(n) ausgewählt ist aus der Gruppe, die gebildet wird durch die Temperatur, den pH-Wert, die Leitfähigkeit und den Druck eines durch den betreffenden Sensor 1 hindurchströmenden oder von diesem kontaktierten Fluids.

Wenn alternativ oder kumulativ mindestens ein Parameter gemessen wird, kann dieser oder einer dieser gemessene(n) physikalische(n) oder physikalisch-chemische(n) Parameter kennzeichnend sein für die Qualität und/oder Zusammensetzung eines Fluids, das den betreffenden Sensor 1 durchströmt oder mit ihm in Kontakt kommt, wie z. B. Trübung, das Vorhandensein von Schadstoffen oder das Vorhandensein eines festen und/oder gasförmigen Anteils bzw. fester und/oder gasförmiger Anteile.

Die oben genannten Größen und Parameter sind selbstverständlich nur Beispiele, die nicht beschränkend sind.

Dementsprechend werden fortlaufend Datentelegramme 17 zu einem bestimmten Zeitpunkt gebildet und sukzessive übertragen. Die einzelnen Datenpakete PA₁, ..., PAₙ bilden im Anschluss daran in ihrer Summe einen fortlaufenden zeitgestempelten Rohmessdatenstrom 13.

Fig. 4 zeigt exemplarisch ein Beispiel für eine Nachrichtenstruktur, die vom Sensor 1 bzw. Verbrauchszähler 10 an den Datensammler 3 bzw. an das Head-End 4 übertragen wird. Jede Zeitstempelung TS, bis TS_{N} entspricht hierbei im Rahmen des Korrelierungsmodells einer elementaren Fluidmenge, die durch den Sensor 1 gemessen wird. Das gemessene Fluid kann beispielsweise Gas, Wasser, Kraftstoff oder eine chemische Substanz sein. In dem Zeitintervall T_{E-1} bis Tε werden so N Impulse gemessen und die Zeitstempelungen TS₁ bis TS_{N} gespeichert, was bei einer Menge von z. B. einem Liter pro Zeitstempelung TS einer Durchflussmenge von insgesamt N Liter innerhalb dieses Zeitintervalls entspricht. Die Messwertaufbereitung bildet ein Datenpaket PAⱼ, welches N Zeitstempelungen TS₁ bis TS_{N} enthält. Aus der Mehrzahl von Datenpaketen z. B. PA₁ bis PA₆ bzw. PA₇ bis PA₁₂ werden gemäß Fig. 3 Datentelegramme 17ᵢ, 17ᵢ₊₁ gebildet.

Damit sich das erfindungsgemäße Verfahren an Veränderungen in der Entwicklung des Parameters oder der Messgröße anpassen kann und gleichzeitig eine zufriedenstellende Aktualisierung der verfügbaren Momentandaten gewährleistet ist, kann das Verfahren vorteilhafterweise insbesondere darin bestehen, ein neues Paket bzw. Telegramm 17 zu bilden bzw. eine neue Datenübertragung in Form einer Nachricht oder eines Telegramms durchzuführen, sobald mindestens die nachfolgende Bedingung b) erfüllt ist:
(a) Ein vorgegebenes Zeitintervall ist abgelaufen und/oder
(b) eine vorgegebene Menge an insbesondere komprimierten gesammelten Daten bzw. Zeitstempelungen TS seit der vorherigen Übertragung ist erreicht.

Die Anwendung der genannten Bedingung (b) kann beispielsweise darin bestehen, nachdem eine vorgegebene Anzahl neuer Zeitstempelungen TS erstellt wurde, regelmäßig die Größe aller neuen Zeitstempelungen TS in komprimierter oder verdichteter Form zu überprüfen. Wenn diese Größen nahe einer kritischen Größe liegen, beispielsweise nahe der Größe eines durch das Übertragungsprotokoll festgelegten Pakets, wird ein neuer Übertragungsvorgang durchgeführt (Bedingung (b) vor Bedingung (a) erfüllt), es sei denn, das vorgegebene Zeitintervall zwischen zwei aufeinanderfolgenden Übertragungen ist zuerst abgelaufen (Bedingung (a) vor Bedingung (b) erfüllt).

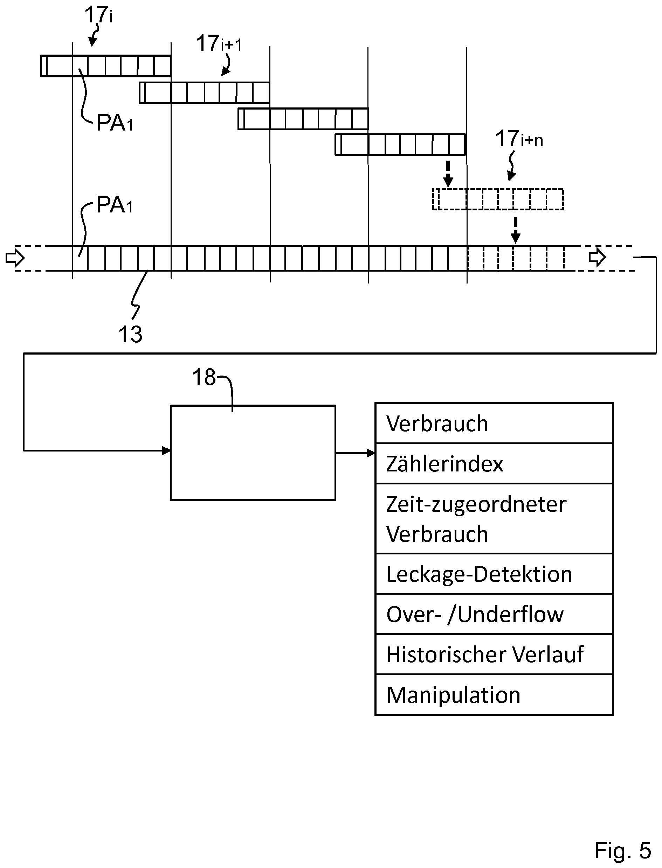

Fig. 5 zeigt die Weiterverarbeitung der einzelnen in Datentelegrammen 17ᵢ bis 17ᵢ₊ₙ bereitgestellten Zeitstempelungen TS zu einer fortlaufenden zusammenhängenden Zuordnung, aus der anhand des Korrelierungsmodells ein lückenloser Rohmessdatenstrom 13 rekonstruiert werden kann. Hierbei werden die einzelnen Datentelegramme 17ᵢ bis 17ᵢ₊ₙ so zusammengefügt, dass die jeweiligen Daten bzw. Datenpakete (PAⱼ) bzw. die darin enthaltenen Zeitstempelungen TS in Zeitrelation mit denen der benachbarten Datenpakete PAⱼ gebracht werden.

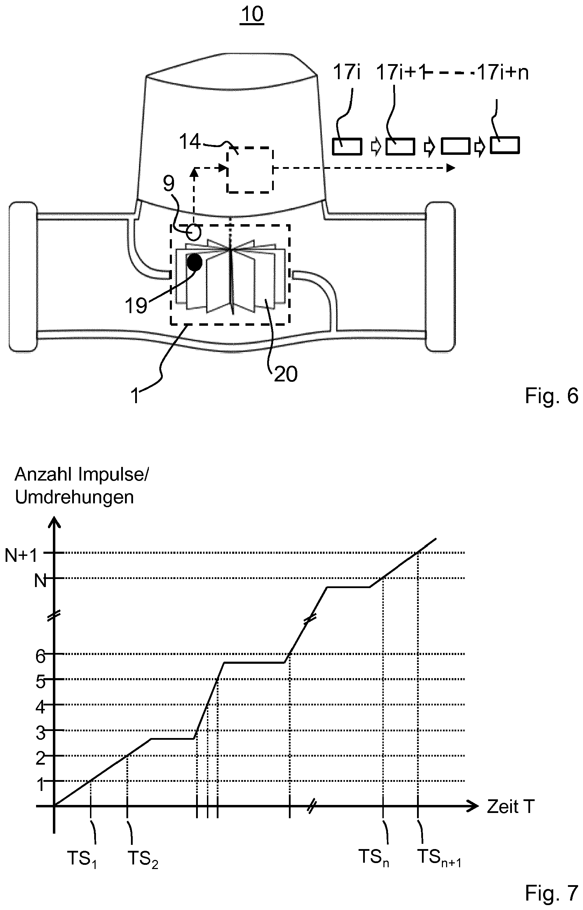

In Fig. 6 ist lediglich beispielhaft ein mechanischer Durchflusszähler 10 mit einem Sensor 1 für den Durchfluss dargestellt. Der Sensor 1 umfasst ein Flügelrad 20, ein Messelements 9 in Form z.B. eines Hallsensors sowie ein Impulsgeberelement 19, welches sich abhängig von dem Durchfluss durch den Durchflusszähler 10 hindurch mehr oder weniger dreht. Die Drehbewegung des Flügelrads 20 wird von dem Messelement 9 als Spannungswert erfasst, der von dem Impulsgeberelement 19 angeregt wird, sofern sich der betreffende Flügel des Flügelrads 20 in der Position des Messelements 9 befindet. Durch das Korrelierungsmodell ist beim Auswerten bekannt, welchem Durchflussvolumen eine Umdrehung entspricht. So kann eine Umdrehung des Flügelrades 20 z.B. einem Liter an Fluid entsprechen.

In der Messwertaufbereitung 14 ist ein Korrelierungsmodell hinterlegt, mit dem die Bedingungen für das Generieren von Zeitstempelungen TS bei bestimmten Rohmesswerten vorher festgelegt sind. Fig. 7 zeigt ein vereinfacht dargestelltes Beispiel eines solchen Korrelierungsmodells z. B. für eine fortlaufende kumulierende Durchflussmessung. Die Messeinheit ist hierbei z. B. ein vom Messelement 9 des in Fig. 6 dargestellten Sensors 1 erfasster Impuls z. B. ein Spannungsimpuls, der einer Umdrehung des Flügelrades 20 entspricht. Die vordefinierte Auflösung des Messverfahrens entspricht daher in diesem Beispiel einer Umdrehung des Flügelrads 20. Die Rohmesswerte, also die durch die Umdrehungen ausgelösten Impulse sowie die zugehörige Zeiten T, werden in den Speichermitteln 7 des Sensors 1 abgespeichert. Die Messwertaufbereitung 14 generiert für jeden Rohmesswert (d. h. für jede Umdrehung/Impuls) eine zugehörige Zeitstempelung TS₁, TS₂......bis TSₙ₊₁. Die Zeitstempelungen TS werden fortlaufend in den Speichermitteln 7 abgelegt. Dreht sich das Flügelrad 20 nicht, wird kein Impuls erzeugt und somit auch keine Zeitstempelung vorgenommen. Dreht sich das Flügelrad 20 langsamer, erfolgt der Zeitpunkt der Erfassung des Impulses entlang der Zeitachse T entsprechend später. Dementsprechend wird in diesem Fall eine spätere Zeitstempelung TS erzeugt. Wie aus Fig. 7 ersichtlich, werden somit eine Vielzahl von Zeitstempelungen TS generiert, die den über die betreffende Zeitspanne kontinuierlich gemessenen Durchfluss definieren.

Die Zeitstempelungen TS werden in Datenpaketen PAⱼ zusammengefasst und gemäß Fig. 2 als Datentelegramme 17ᵢ, 17ᵢ₊₁, 17ᵢ₊ₙ sukzessive nach Aufforderung durch den Datensammler 3 über die primäre Kommunikationsstrecke 5 an diesen übertragen. Die Datenübertragung kann hierbei vorzugsweise in komprimierter Form erfolgen. Es handelt es sich folglich um einen kontinuierlichen lückenlosen Zeitstempelungs-Datenstrom von sehr hoher Auflösung, der in Form der einzelnen fortlaufenden Datentelegramme 17ᵢ, 17ᵢ₊₁, ...., 17ᵢ₊ₙ entlang der primären Kommunikationsstrecke 5 übertragen wird.

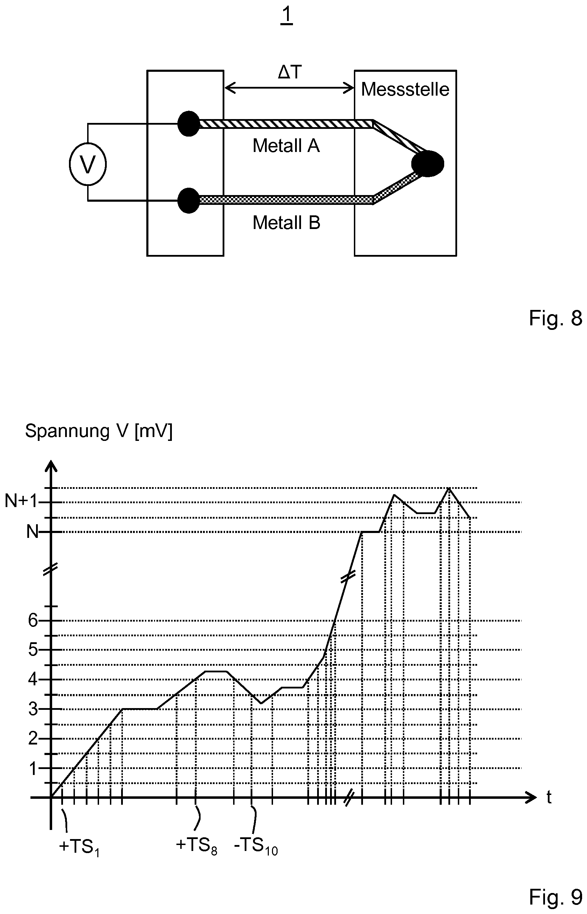

Die Sammlung von Daten ist nicht auf eine Durchflussmessung beschränkt. Fig. 8 zeigt beispielsweise einen Sensor 1 in Form eines auf Widerstandsmessung basierenden Temperaturfühlers. Der Temperaturfühler umfasst zwei im Bereich einer Messstelle miteinander verbundener Metallleiter (A, B) mit unterschiedlicher Wärmeleitfähigkeit. Im Falle eines Temperaturunterschieds ΔT zwischen der Messstelle und dem gegenüberliegenden Ende der beiden Leiter kann eine Spannung V bzw. Spannungsänderung abgegriffen werden. In diesem Fall kann als Korrelierungsmodell eine Zeitstempelung TS für eine Änderung der vom Sensor erfassten Spannung festgelegt werden.

Fig. 9 zeigt ein Beispiel für eine entsprechende Rohmessdatenkurve von Spannungswerten V zur Generierung von entsprechenden Zeitstempelungen TS bei einer Temperaturmessung. Dementsprechend wird bei jedem Anstieg oder Abfall der Spannung z. B. um 0,5 mV eine zugehörige Zeitstempelung TS generiert.

Die festgelegte Auflösung des Verfahrens beträgt somit 0,5 mV. Da der Kurvenverlauf bei einer Temperaturmessung aufsteigend sowie abfallend sein kann, werden in diesem Fall die Zeitstempelungen mit einem Vorzeichen "+" für ansteigend oder "-" für abfallend versehen. Wie aus Fig. 9 deutlich wird, erhält man auch hier eine kontinuierliche Abfolge von Zeitstempelungen TS, die den gemessenen Spannungsverlauf und somit die Temperatur über den betrachteten Zeitraum sehr genau und lückenlos abbilden. Ändert sich die Temperatur d. h. die Spannung V nicht, wird keine Zeitstempelung generiert. Im Übrigen entspricht das Verfahren den in Zusammenhang mit dem eingangs beschriebenen Beispiel der Durchflussmessung dargelegten Maßnahmen.

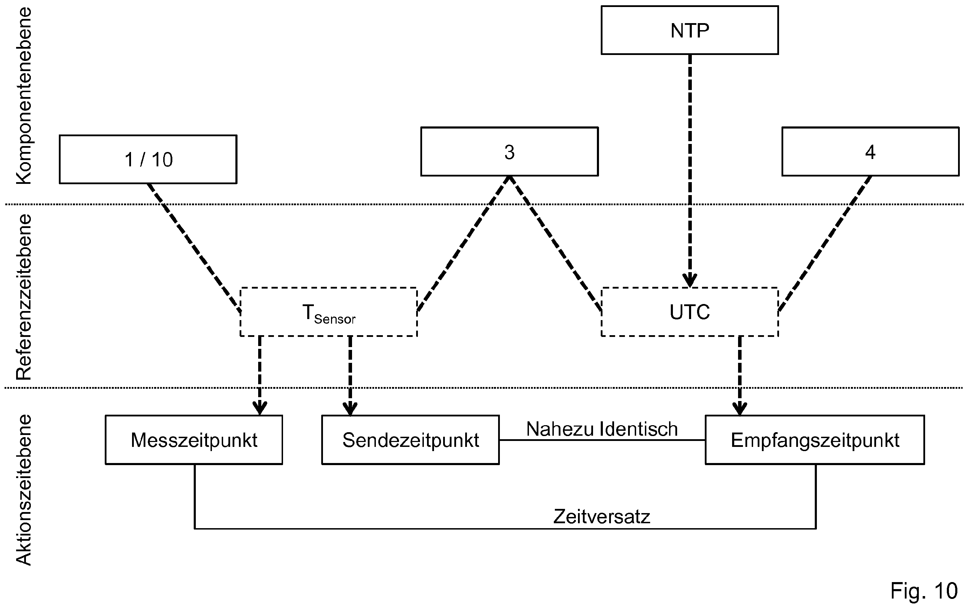

Das in Fig. 10 dargestellte Sensor-Netzwerk umfasst in der Komponentenebene einen Sensor 1 bzw. einen Verbrauchszähler 10, einen Datensammler 3 sowie ein Head-End 4. Der Sensor 1 bzw. der Verbrauchszähler 10 verfügen in der Referenzzeitebene über eine eigene Sensorzeit Ts, welche beispielsweise über einen Schwingquarz im Sensor 1 bzw. im Verbrauchszähler 10 bestimmt wird. Das Head-End 4 und der Datensammler 3 sind mit einer Standardzeit synchronisiert, wie beispielsweise der koordinierten Weltzeit (UTC). Die Standardzeit kann beispielsweise von einem Server mittels Network Time Protocol (NTP) abgerufen werden. Sofern es sich um ein unidirektionales Sensor-Netzwerk handelt, kann es mehrere Zeitzonen geben aufgrund des fehlenden Downlinks vom Datensammler 3 bzw. vom Head-End 4 an den Sensor 1 bzw. an den Verbrauchszähler 10 zur Synchronisation der Zeit des Sensors 1 bzw. des Verbrauchszählers 10. Somit ist es notwendig, dass das System die individuellen variierenden Zeiten des Sensors 1 bzw. des Verbrauchszählers 10 mit der Weltzeit koordiniert und/oder kompensiert.

Die Sensorzeit T_{Sensor} zum Messzeitpunkt am Sensor 1 bzw. am Verbrauchszähler 10 wird für die Generierung von Zeitstempelungen TS auf der Basis des Korrelierungsmodells von Rohmessdaten verwendet. Der Messzeitpunkt ist daher üblicherweise mit einem Zeitversatz im Vergleich zum Empfangszeitpunkt am Datensammler 3 behaftet. Für den Sendezeitpunkt eines Telegramms vom Sensor 1 bzw. vom Verbrauchszähler 10 kann die Annahme getroffen werden, dass dieser identisch bzw. nahezu identisch mit dem Empfangszeitpunkt dieses Telegramms am Datensammler 3 ist.

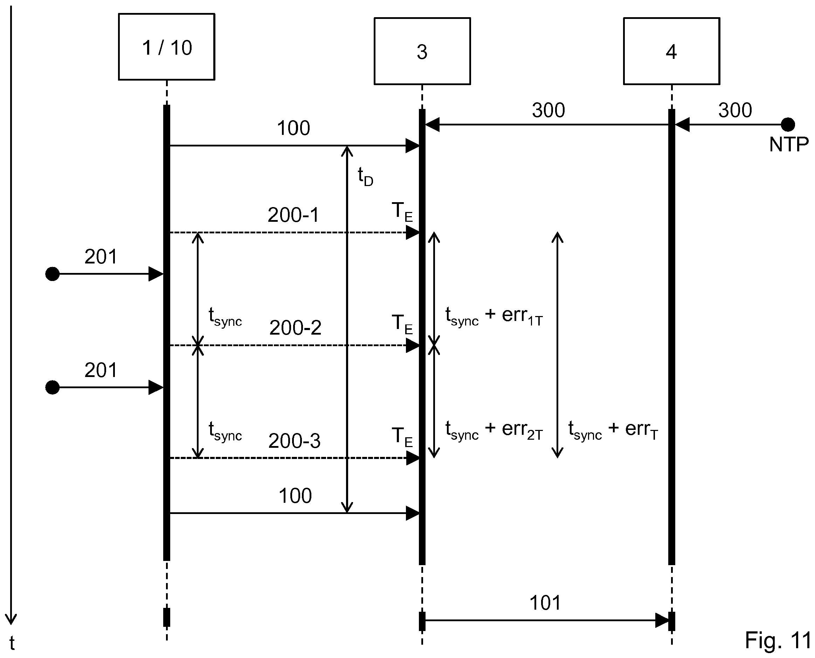

Bei der in Fig. 11 gezeigten Ausgestaltung der Erfindung ist die Kompensation des zeitlichen Versatzes 200 entkoppelt und unabhängig von der tatsächlichen Übertragung der Daten bzw. der Zeitstempelungen 100. Die vom Sensor 1 bzw. Verbrauchszähler 10 aufgenommenen Zeitstempelungen TS von Rohmessdaten auf der Basis des Korrelierungsmodells werden gebündelt in Form von Zeitstempelungs-Telegrammen 100 in einem Zeitintervall t_{D} an den Datensammler 3 weiter gesendet. Die Zeitintervalle in denen der Sensor 1 bzw. der Verbrauchszähler 10 die Zeitstempelungen TS generieren sind somit kürzer als die Zeitintervalle in denen die Zeitstempelungen TS weiter an den Datensammler 3 übertragen werden. Die Zeitstempelungen TS werden beispielsweise in den Speichermitteln 7 des Verbrauchszählers 10 bis zur Übertagung als Zeitstempelungs-Telegramm 100 zwischengespeichert. Anschließend werden die Zeitstempelungen TS zum Weitersenden vom Verbrauchszähler 10 an den Datensammler 3 als Zeitstempleungs-Telegramme 100 vorbereitet. Die Zeitstempelungs-Telegramme 100 enthalten die Zeitstempelungen TS, welche beispielsweise durch Arrays aus Zeitpunkten dargestellt werden. Zusätzlich können die Zeitstempelungs-Telegramme 100 die Sendezeit basierend auf der Sensorzeit T_{Sensor} senden. Ein Zeitstempelungs-Telegramm 100 kann demnach ein Datentelegramm 17 oder ein Datenpaket PAⱼ sein bzw. dieses enthalten. Die Zeitstempel des Sensors 1 bzw. des Verbrauchszählers 10 entsprechen dabei keiner Standardzeit. Der Sensor 1 bzw. der Verbrauchszähler 10 senden die Zeitstempelungs-Telegramme 100 entsprechend eines vordefinierten Sendeintervalls. Diese Sendeintervalle sind üblicherweise asynchron zum Zeitgeber im Datensammler 3 bzw. Head-End 4, wodurch eine korrekte Zeitkorrelation zwischen der aktuellen Sensorzeit T_{Sensor} und der Standardzeit UTC nicht direkt möglich ist. Um eine Zeitkorrelation zwischen dem Sensor 1 bzw. dem Verbrauchszähler 10 und dem Datensammler 3 bzw. dem Head-End 4 herzustellen, sendet der Sensor 1 bzw. der Verbrauchszähler 10 zusätzlich synchrone und gegebenenfalls nummerierte Kompensations-Telegramme 200. Diese Kompensations-Telegramme 200 weisen eine im System bekannte Periodizität auf.

Der Sensor 1 bzw. der Verbrauchszähler 10 verwenden für die Erstellung der Kompensations-Telegramme 200 zeitdiskrete Werte 201. Diese zeitdiskreten Werte 201 können beispielsweise von einem Schwingquarz abgeleitet werden.

Der Datensammler 3 empfängt die Zeitstempelungs-Telegramme 100 sowie die Kompensations-Telegramme 200. Der Datensammler 3 misst präzise den Empfangszeitpunkt T_{E} der Kompensations-Telegramme 200. In Fig. 11 sind beispielhaft drei Kompensations-Telegramme 200-1 bis 200-3 dargestellt. Der Datensammler 3 berechnet den Zeitversatz und/oder den zeitlichen Drift err_{T} durch den Abstand zwischen den Kompensations-Telegrammen 200. Der Abstand t_{sync} zwischen den Kompensations-Telegrammen 200 muss hierfür kurz genug sein. Dadurch ist die Annahme gerechtfertigt, dass kein signifikanter zeitlicher Drift zwischen zwei bzw. mehreren Kompensations-Telegrammen 200 auftritt. In Fig. 11 werden die Kompensations-Telegramme 200-1 bis 200-3 mit einem zeitlichen Abstand von t_{sync} vom Sensor 1 bzw. vom Verbrauchszähler 10 ausgesendet. Der Datensammler 3 bestimmt den zeitlichen Abstand zwischen den empfangenen Kompensations-Telegrammen 200-1 bis 200-3 durch die Empfangszeitpunkte Tε. Sofern die Zeitintervalle zwischen den Empfangszeitpunkten Tε nicht dem Zeitintervall t_{sync} entsprechen, wird ein Fehler err_{1T} bzw. err_{2T} bestimmt. Durch die Nummerierung der Kompensations-Telegramme 200 kann der Zeitversatz und/oder der zeitliche Drift err_{T} ermittelt werden, beispielsweise durch eine Mittelung des Fehlers err_{1T} bis err_{100T} von hundert Kompensations-Telegrammen 200.

Der Datensammler 3 bereitet die empfangenen Zeitstempelungs-Telegramme 100, welche beispielsweise Arrays mit Zeitstempelungen TS auf Basis der Sensorzeit T_{Sensor} enthalten, zusammen mit dem für den Sensor 1 bzw. Verbrauchszähler 10 ermittelten Zeitversatz und/oder zeitlichen Drift err_{T} als Zeitstempelungs-Paket 101 zum Hochladen an das Head-End 4 vor. Die Zeitstempelungs-Pakete 101 werden gemäß einem vorher festgelegten Zeitintervall hochgeladen. Die Berechnung des Zeitversatzes und/oder des zeitlichen Drifts err_{T} kann neben dem Datensammler 3 auch beispielsweise im Head-End 4 erfolgen. In diesem Fall enthalten die Zeitstempelungs-Pakete 101 zudem für jeden Sensor 1 bzw. Verbrauchszähler 10 individuelle Arrays mit den Empfangszeiten T_{E} aus denen der Zeitversatz und/oder der zeitliche Drift err_{T} berechnet werden kann. Für ein Array aus Zeitstempelungen TS gilt ein zeitlicher Drift, wogegen für die einzelne Zeitstempelung ein Versatz gilt. Durch Kenntnis des Versatzes kann zudem der zeitliche Drift kompensiert werden.

Das Head-End 4 empfängt Zeitstempelungs-Pakete 101 von einer Vielzahl von Datensammlern 3. Das Head-End 4 überwacht den aktuellen Zeitversatz und/oder den aktuellen zeitlichen Drift aller Sensoren 1 bzw. Verbrauchszähler 10, die unter der Verwaltung des Head-Ends 4 stehen. Sobald das Head-End 4 ein Update für den Zeitversatz und/oder den zeitlichen Drift eines Sensors 1 bzw. Verbrauchszählers 10 erhält, koordiniert das Head-End 4 den empfangenen neuen Wert mit dem aktuellen Wert und führt eine Validierung durch. Das Head-End 4 ordnet die Arrays aus Zeitstempelungen TS entsprechend dem für den Sensor 1 bzw. Verbrauchszähler 10 individuell validierten Zeitversatz und/oder zeitlichen Drift neu an und persistiert die Daten bzw. hält die Daten über einen längeren Zeitraum bereit.

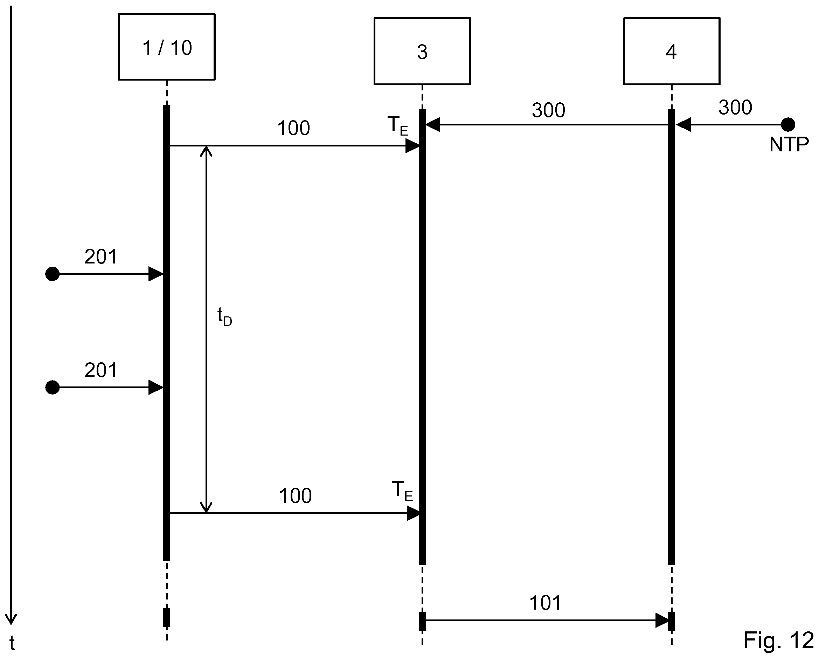

In der in Fig. 12 dargestellten Ausgestaltung ist die Zeitkompensation in die reguläre Übertragung der Zeitstempelungen TS bzw. in die Zeitstempelungs-Telegramme 100 integriert. Dadurch besteht eine enge Kopplung zwischen den Zeitstempelungen TS und der Messzeit innerhalb der Dateneinheiten. Sofern Zeitstempelungen TS innerhalb des Systems ausgetauscht bzw. übertragen werden, besteht für jede Einheit zur Datenverarbeitung die Möglichkeit, auf beide Informationen zuzugreifen. Andererseits ist es notwendig, dass der Sensor 1 bzw. der Verbrauchszähler 10 das Senden der Zeitstempelungen TS anpasst. Hierfür kann der Sendezeitpunkt auf Basis der Sensorzeit T_{Sensor} innerhalb des entsprechenden Zeitstempelungs-Telegramm 100 übermittelt werden. Der Datensammler 3 zeichnet für jedes empfangene Zeitstempelungs-Telegramm 100 den Empfangszeitpunkt Tε basierend auf der Realzeit, wie UTC, auf.

Ein Datagramm aus Zeitstempelungen TS enthält eine Mehrzahl an Zeitstempelungen TS sowie zusätzlich den exakten Übertragungszeitpunkt. Unter der Annahme, dass der Empfangszeitpunkt T_{E} am Datensammler 3 und der Sendezeitpunkt am Sensor 1 bzw. Verbrauchszähler 10 identisch sind, ist der Datensammler 3 in der Lage, den Zeitversatz und/oder den zeitlichen Drift zwischen seiner eigenen Standardzeit UTC und der Sensorzeit T_{Sensor} zu berechnen. Es muss davon ausgegangen werden, dass zwischen dem Senden und dem Empfangen kein signifikanter zeitlicher Versatz auftritt.

Hierfür ist es beispielsweise notwendig im Sensor 1 bzw. im Verbrauchszähler 10 das Zeitstempelungs-Telegramm 100 mit der Sendezeit des Verbrauchszählers 10 versehen werden, welche sich z. B. vom Zeitgeber des Verbrauchszählers 10 ableitet. Im Datensammler 3 kann beim Empfang dieses Zeitstempelungs-Telegramms 100 die mitgesendete Sendezeit des Verbrauchszählers 10 mit der Empfangszeit im Datensammler 3 verglichen werden. Sofern kein Zeitversatz und/oder zeitlicher Drift err_{T} zwischen Verbrauchszähler 10 und Datensammler 3 vorliegt, würde unter der oben beschriebenen Annahme, dass der Sendezeitpunkt des Zeitstempelungs-Telegramms 100 identisch ist mit dem Empfangszeitpunkt dieses Zeitstempelungs-Telegramms 100, die vom Verbrauchszähler 10 gesendete Sendezeit mit der Empfangszeit im Datensammler 3 übereinstimmen. Sofern die Sendezeit und Empfangszeit nicht identisch sind, kann daraus ein Zeitversatz und/oder zeitlicher Drift err_{T} zwischen dem Zeitgeber des Verbrauchszählers 10 und dem Zeitgeber des Datensammlers 3 berechnet werden. Sofern der Zeitversatz der Sensorzeit T_{Sensor} zur Realzeit bekannt ist, können dazu relative Zeitstempelungen TS telegrammindividuell berichtigt werden.

Bei den in Fig. 11 sowie in Fig. 12 dargestellten Ausgestaltungen ist es unerheblich für die Anwendbarkeit des Verfahrens, ob die Korrektur des Zeitversatzes und/oder des zeitlichen Drifts err_{T} im Datensammler 3 oder im Head-End 4 durchgeführt wird. Da das Head-End 4 sowie der Datensammler 3 mit derselben Standardzeit koordiniert sind, z. B. mit der koordinierten Weltzeit UTC, sind demnach Datensammler 3 sowie Head-End 4 in der Lage, die Korrektur des Zeitversatzes und/oder des zeitlichen Drifts durchzuführen.

Durch die erfindungsgemäße Sammlung von Zeitstempelungen TS, die von den Sensoren 1 bzw. Verbrauchszählern 10 des oder eines bestimmten Netzwerks geliefert werden, ermöglicht die Erfindung alle Arten von Auswertung, Analyse, Überprüfung, Überwachung sowie allgemein nützlicher oder gewünschter Verarbeitung und Verwertung, da die grundlegende einzelne Rohinformation zur Verfügung steht. Die Auswertung der bereitgestellten Zeitstempelungen TS erfolgt vorzugsweise im Bereich des Head-Ends 4 über Auswertemittel 18 und ergibt eine Vielzahl wichtiger Informationen, die für die Verwaltung des Versorgungsnetzes notwendig sind, bisher aber noch nicht generiert werden konnten, wie z.B. Verbrauch, Zählerindex, zeitzugeordneter Verbrauch, Leckage-Detektion, Over-/Underflow, historischer Verlauf und/oder Manipulation. Informationen können somit jederzeit auch retrospektive zeitlückenlos abgerufen und einer bisherigen Auswertung zugeführt werden.

Die aus den Zeitstempelungen TS rekonstruierten Rohmessdaten liegen im Head-End 4 erfindungsgemäß als Rohmessdatenstrom 13 in sehr hoher Auflösung bzw. Granularität ohne zeitliche Lücken vor. Demzufolge liegen im Gegensatz zu bisherigen Verfahren aufgrund des erfindungsgemäßen Verfahrens im Head-End 4 sehr viel mehr verwertbare Daten vor als bisher.

Der im Head-End 4 vorliegende Rohmessdatenstrom 13 besitzt vorzugsweise eine Auflösung im Sekundenbereich, Zehntelsekundenbereich, Hundertstelsekundenbereich oder Tausendstelsekundenbereich.

Gegenstand der Erfindung ist auch, wie in Fig. 1 schematisch dargestellt, ein Versorgungsnetz zur Verteilung eines insbesondere fluiden Verbrauchsguts unter Einsatz entsprechend hergerichteter Verbrauchszähler 10, die in dem Versorgungsnetz betrieben werden. Der jeweilige Verbrauchszähler 10 umfasst, vgl. Fig. 2, mindestens einen Sensor 1, welcher über ein Messelement 9 Rohmessdaten erfassen kann. Des Weiteren umfasst der jeweilige Verbrauchszähler 10 eine Messdatenaufbereitung 14, die einen Mikroprozessor 8, Speichermittel 7 sowie eine Zeitreferenzeinrichtung 15 beinhaltet. In der Messdatenaufbereitung 14 erfolgt eine Zeitstempelung TS aufgrund der Rohmessdaten, eine Komprimierung der Zeitstempelungen TS sowie eine Aufbereitung in ein Format, das zur Übertragung über eine Funkstrecke 11 bzw. über die primäre Kommunikationsstrecke 5 gemäß einem bestimmten Protokoll geeignet ist.

Der Verbrauchszähler 10 kann eine (nicht dargestellte) eigene Stromversorgung in Form einer Batterie oder dergleichen bei Bedarf umfassen. Somit kann der Verbrauchszähler 10 energieautark betrieben werden.

Im Bereich des Head-Ends 4 sind Auswertemittel 18 vorgesehen, die in der Lage sind, die Zeitstempelungen TS in den einzelnen Datentelegrammen 17ᵢ - 17ᵢ₊ₙ bzw. deren Datenpakete PAⱼ zeitkontinuierlich und ohne Lücken zu einem fortlaufenden lückenlosen Rohmessdatenstrom 13 zusammenzuführen und hieraus entsprechende Dekomprimierungen, Auswertungen, Berechnungen und dergleichen vorzunehmen. Die entsprechenden Daten umfassen vorzugsweise alle in dem Versorgungsnetz befindlichen Verbrauchszähler 10.

Darüber hinaus umfasst das vorgenannte System für das betreffende oder jedes geografische Gebiet, in dem die Verbrauchszähler 10 installiert sind, einen festen Datensammler 3 (Konzentrator), der mit den Verbrauchszählern 10 des Gebietes, das ihm zugewiesen ist, eine primäre Kommunikationsstrecke 5 des Versorgungsnetzes bildet. Die primäre Kommunikationsstrecke 5 kann beispielsweise als Funkstrecke 11 ausgebildet sein. Der Datensammler 3 ist wiederum über eine tertiäre Kommunikationsstrecke 6 mit dem Head-End 4 verbunden. Die Daten können entlang der tertiären Kommunikationsstrecke 6 auf unterschiedliche Art und Weise übertragen werden, beispielsweise via LAN, GPRS, LTE, 3G, 4G usw.

Vorzugsweise bilden die Speichermittel 7 eines jeden Sensors 1 bzw. Verbrauchszählers 10 einen Pufferspeicher und sind geeignet und dazu hergerichtet, den Inhalt mehrerer PAⱼ-Pakete von Zeitstempelungen TS insbesondere im komprimierten Zustand zu speichern, wobei der Inhalt oder ein Teil des Inhalts dieses Pufferspeichers bei jeder Übertragung bzw. Abruf durch den Datensammler 3 übertragen wird.

Die von jedem Datensammler 3 gesammelten Informationen werden direkt oder indirekt an das Head-End 4 übermittelt. Dort werden auch die "Business"-Funktionen definiert und ausgeführt.

Mit dem erfindungsgemäßen Verfahren können somit beliebige Rohmessdaten abgetastet und als Auslöser für Zeitstempelungen TS verwendet werden. Bei den Zeitstempelungen TS kann es sich insbesondere um Zeitpunkte oder Zeitdifferenzen handeln. Vorzugsweise ist ein Startzeitpunkt definiert.

Vorzugsweise werden die Zeitstempelungen TS in den Speichermitteln 7 des Verbrauchszählers 10 erst dann gelöscht, wenn die Übertragung der Zeitstempelungen TS über die primäre Kommunikationsstrecke 5 vom Empfänger bzw. Datensammler 3 bestätigt worden ist.

Der Fachmann versteht selbstverständlich, dass die Erfindung auf die Messung und Fernauslesung verschiedenster Parameter und Größen angewendet werden kann: Es genügt, eine elementare (vom Sensor 1 messbare) Veränderung eines Parameters oder einer Größe in Übereinstimmung mit der Auflösung des betrachteten Sensors 1 genau datieren zu können (die zeitgestempelte elementare Variation kann der Auflösung des Sensors oder möglicherweise einem Vielfachen dieser Auflösung entsprechen).

Selbstverständlich ist die Erfindung nicht auf die in den beigefügten Zeichnungen beschriebenen und dargestellten Ausführungsformen beschränkt. Änderungen bleiben möglich, insbesondere hinsichtlich der Beschaffung der verschiedenen Elemente oder durch technische Entsprechungen, ohne dass dadurch der Schutzbereich der Erfindung verlassen wird, der durch die folgenden Ansprüche definiert wird.

### BEZUGSZEICHENLISTE

- 1: Sensor
- 2: Funk-Kommunikationsmittel
- 3: Datensammler
- 4: Head-End
- 5: primäre Kommunikationsstrecke
- 6: tertiäre Kommunikationsstrecke
- 7: Speichermittel
- 8: Mikroprozessor
- 9: Messelement
- 10: Verbrauchszähler
- 11: Funkstrecke
- 13: Rohmessdatenstrom
- 14: Messdatenaufbereitung
- 15: Zeitreferenzeinrichtung
- 16: Versorgungsleitung
- 17: Datentelegramm
- 18: Auswertemittel
- 19: Impulsgeberelement
- 20: Flügelrad
- 22/23: Ultraschallwandlerelement
- 24: Ultraschallmessstrecke

- 100: Zeitstempelungs-Telegramm
- 101: Zeitstempelungs-Paket
- 200: Kompensations-Telegramm
- 201: Zeitdiskreter Wert
- 300: sync NTP

- W: Pulsweite
- T_{Sensor}: Sensorzeit
- Tε: Empfangszeitpunkt
- err_{T}: Zeitversatz / zeitlicher Drift
- PAⱼ: Datenpaket
- TS: Zeitstempelung

## Patentansprüche

1. Verfahren zum Sammeln von Daten in Zusammenhang mit einem Verbrauch, einem physikalischen oder physikalisch-chemischen Parameter und/oder einem Betriebszustand im Rahmen eines Betriebs eines lokalen Sensors (1), vorzugsweise eines Sensors (1) für einen Verbrauchszähler (10), als Bestandteil eines mindestens einen lokalen Sensor (1) vorzugsweise eine Mehrzahl von lokalen Sensoren (1) umfassendes Versorgungsnetzes zur Verteilung eines Verbrauchsguts, wobei
der Sensor (1) ein Messelement (9) enthält,
das Messelement (9) des jeweiligen Sensors (1) elementare Messeinheiten, die mindestens einer physikalischen oder physikalisch-chemischen Größe oder mindestens eines physikalischen oder physikalisch-chemischen Parameters entsprechen, als Rohmessdaten liefert, und
der Sensor (1) Funk-Kommunikationsmittel (2) sowie Speichermittel (7) umfasst, wobei
zur Festlegung der Messauflösung des Sensors (1) die Bedingungen für ein Generieren von Zeitstempelungen (TS) unter Anwendung eines Korrelierungsmodells vorher festgelegt werden,
auf der Basis des Korrelierungsmodells Zeitstempelungen (TS) von aufeinanderfolgenden Rohmessdaten in dem Sensor (1) generiert werden,
die Zeitstempelungen (TS) über eine drahtgebundene Verbindung und/ oder über eine Funkstrecke übertragen werden, so dass auf Basis der Zeitstempelungen (TS) unter Anwendung des Korrelierungsmodells die vom Messelement (9) erfassten Rohmessdaten rekonstruiert und ausgewertet werden, und wobei
der Sensor (1) über eine primäre Kommunikationsstrecke (5) mit einem Datensammler (3) in Verbindung steht,
zwischen dem Datensammler (3) und einem Head-End (4) eine tertiäre Kommunikationsstrecke (6) vorgesehen ist, und
die von dem Sensor (1) übertragenen Zeitstempelungen (TS) im Datensammler (3) und/oder im Head-End (4) gesammelt, gespeichert und/oder ausgewertet werden, **dadurch gekennzeichnet, dass**
der zeitliche Versatz zwischen dem Sensor (1) und dem Datensammler (3) oder dem Head-End(4) korrigiert wird, indem zur Kompensation des zeitlichen Versatzes Telegramme gesendet werden und
eine Mehrzahl von Zeitstempelungen (TS) entlang der primären Kommunikationsstrecke (5) jeweils als Datenpaket (17ᵢ, 17ᵢ₊ₙ) übertragen werden, wobei ein Datenpaket jeweils mehrere Zeitstempelungen (TS1-TSn) enthält, und
die Festlegung, wann eine Datenübertragung vom Sensor (1) durchzuführen ist, davon abhängt, ob eine vorgegebenen Menge an insbesondere komprimierten gesammelten Zeitstempelungen (TS) seit der vorherigen Datenübertragung erreicht ist.

2. Verfahren nach einem der Ansprüche 1, **dadurch gekennzeichnet, dass** im Rahmen des Korrelierungsmodells ein bestimmter Wert, eine bestimmte Wertänderung oder eine bestimmte Wertdifferenz der mindestens einen physikalischen oder physikalisch-chemischen Größe oder des mindestens einen physikalischen oder physikalisch-chemischen Parameters für die Zuordnung einer Zeitstempelung (TS) festgelegt wird,
bei einem Erfassen des bestimmten Werts, der bestimmten Wertänderung oder der bestimmten Wertdifferenz durch das Messelement (9) eine Zeitstempelung (TS) ausgelöst und in den Speichermitteln (7) des Sensors (1) abgespeichert wird.

3. Verfahren nach einem der vorhergehenden Ansprüche, **dadurch gekennzeichnet, dass** im Rahmen des Korrelierungsmodells ein schrittweise oder inkrementell sich erhöhender Zählerstand und/oder eine Wertetabelle mittels Zeitstempelungen (TS) abgebildet wird.

4. Verfahren nach einem der vorhergehenden Ansprüche, **dadurch gekennzeichnet, dass** die Zeitstempelungen (TS) mit einem Vorzeichen versehen sind.

5. Verfahren nach einem der vorhergehenden Ansprüche, **dadurch gekennzeichnet, dass** auf Basis der beim Datensammler (3) und/oder beim Head-End (4) ankommenden Zeitstempelungen (TS) unter Anwendung des Korrelierungsmodells ein Rohmessdatenstrom (13) generiert wird.

6. Verfahren nach einem der vorhergehenden Ansprüche, **dadurch gekennzeichnet, dass** vom Sensor (1) zum Empfänger eine unidirektionale drahtgebundene Verbindung und/oder Funkverbindung besteht.

7. Verfahren nach einem der vorhergehenden Ansprüche, **dadurch gekennzeichnet, dass** die Telegramme zur Kompensation des zeitlichen Versatzes durchnummeriert werden.

8. Verfahren nach einem der vorhergehenden Ansprüche, **dadurch gekennzeichnet, dass** durch die Empfangszeit der Telegramme zur Kompensation des zeitlichen Versatzes ein Fehlerwert berechnet wird.

9. Verfahren nach einem der vorhergehenden Ansprüche, **dadurch gekennzeichnet, dass** die Periodizität der Telegramme zur Kompensation des zeitlichen Versatzes bekannt ist und darauf basierend der Fehlerwert berechnet wird.

10. Verfahren nach einem der vorhergehenden Ansprüche, **dadurch gekennzeichnet, dass** der Datensammler (3) und/oder das Head-End (4) die Telegramme zur Kompensation des zeitlichen Versatzes empfangen und einen zeitlichen Fehler basierend auf dem zeitlichen Abstand zwischen Telegrammen zur Kompensation des zeitlichen Versatzes ermittelt.

11. Verfahren nach einem der vorhergehenden Ansprüche, **dadurch gekennzeichnet, dass** die Daten-Telegramme (17) asynchron zu den Telegrammen zur Kompensation des zeitlichen Versatzes vom Sensor (1) gesendet werden.

12. Verfahren nach einem der vorhergehenden Ansprüche, **dadurch gekennzeichnet, dass** das zeitliche Sendeintervall der Telegramme zur Kompensation des zeitlichen Versatzes und das zeitliche Sendeintervall der Zeitstempelungen (TS) unterschiedlich sind.

13. Verfahren nach einem der vorhergehenden Ansprüche, **dadurch gekennzeichnet, dass** die Zeitstempelungen zusammen mit den Telegrammen zur Kompensation des zeitlichen Versatzes vom Datensammler (3) an das Head-End (4) gesendet werden, wobei insbesondere vorgesehen ist, dass der Datensammler (3) und/oder das Head-End (4) die Telegramme zur Kompensation des zeitlichen Versatzes einer Vielzahl von Sensoren (1) koordinieren und gemäß den individuellen zeitlichen Fehlerwerten ordnen.

14. Verfahren nach einem der Ansprüche 1 bis 10, **dadurch gekennzeichnet, dass** die Zeitstempelungen (TS) zusammen mit den Telegrammen zur Kompensation des zeitlichen Versatzes vom Sensor (1) gesendet werden.

15. Verfahren nach einem der vorhergehenden Ansprüche, **dadurch gekennzeichnet, dass** der zeitliche Fehler zwischen dem Sensor (1) und einer Standardzeit auf Grundlage des Unterschieds zwischen dem Sendezeitpunkt eines Telegramms im Sensor (1) und dem Empfangszeitpunkt dieses Telegramms im Empfänger, insbesondere im Datensammler (3) und/oder im Head-End (4), bestimmt wird.

16. Verfahren nach einem der vorhergehenden Ansprüche, **dadurch gekennzeichnet, dass** der Rohmessdatenstrom (13) in der Weiterfolge der Datenverarbeitung abgesehen von der Messauflösung des Sensors (1) auf einer zeithistorischen Basis zeitlückenlos auswertbar ist.

17. Verfahren nach einem der vorhergehenden Ansprüche, **dadurch gekennzeichnet, dass** es sich bei den elementaren Messeinheiten um die elektrische Spannung oder um die Stromstärke handelt.

18. Verfahren nach einem der vorhergehenden Ansprüche, **dadurch gekennzeichnet, dass** die gemessene physikalische Größe sich auf ein Versorgungsmedium, vorzugsweise Wasser, Strom, Treibstoff oder Gas, eines Versorgungsnetzes bezieht und/oder der oder einer der gemessene(n) physikalische(n) oder chemisch-physikalische(n) Parameter kennzeichnend ist für die Menge, die Qualität und/oder Zusammensetzung eines Fluids, das durch den betreffenden Sensor (1) strömt oder von diesem kontaktiert wird.

19. Verfahren nach einem der vorhergehenden Ansprüche, **dadurch gekennzeichnet, dass** die elementare Messeinheit (9) eine Zeitstempelung (TS) generiert, sobald die elementare Messeinheit (9) einen Impuls empfängt.

20. Verfahren nach einem der vorhergehenden Ansprüche, **dadurch gekennzeichnet, dass** der Rohmessdatenstrom (13) eine zeitliche Auflösung besitzt, die durch die Sensor-Abtastrate bzw. Messelement-Abtastrate oder ein Vielfaches derselben festgelegt oder bedingt ist, und/oder der Rohmessdatenstrom (13) unter Zugrundelegung einer stetigen zeitlichen Auflösung kontinuierlich und/oder vollständig ist.

21. Verfahren nach einem der vorhergehenden Ansprüche, **dadurch gekennzeichnet, dass** die Festlegung, wann eine neue Datenübertragung in Form einer Nachricht oder eines Telegramms durchzuführen ist vom Ablauf eines vorgegebenen Zeitintervalls abhängt.

22. Verfahren nach einem der vorhergehenden Ansprüche, **dadurch gekennzeichnet, dass** es umfasst, die Zeitstempelungen (TS) durch Formatierung in Datenpaketen (PAⱼ) vorbestimmter fester Größe zu verpacken, wobei jedes Mal, wenn die akkumulierten Daten die Größe eines Datenpakets (PAⱼ) erreichen oder das vorgegebene Zeitintervall abgelaufen ist, eine neue Übertragung ausgelöst wird.

23. Verfahren nach einem der vorhergehenden Ansprüche, **dadurch gekennzeichnet, dass** die Datenübertragung mit einer Redundanz durchgeführt wird, wobei die Redundanz in der Übertragung insbesondere durch wiederholtes Senden derselben Zeitstempelungen (TS) und/oder wiederholtes Senden desselben Datenpakets (PAⱼ) in mehreren aufeinanderfolgenden Übertragungsvorgängen erreicht wird.

24. Verfahren nach einem der vorhergehenden Ansprüche, **dadurch gekennzeichnet, dass** die Zeitstempelungen (TS) in komprimierter Form übertragen werden, wobei insbesondere vorgesehen ist, **dass** die Zeitstempelungen (TS) komprimiert werden und die Komprimierung der Zeitstempelungen (TS) verlustfrei durchgeführt wird oder **dass** die Komprimierung der Zeitstempelungen (TS) mit einem vorgegebenen zulässigen Verlustniveau durchgeführt wird.

25. Sensor (1) zum Sammeln von Daten in Zusammenhang mit einem Verbrauch, einem physikalischen oder physikalisch-chemischen Parameter und/oder einem Betriebszustand im Rahmen eines Betriebs eines lokalen Sensors, vorzugsweise für einen Verbrauchszähler (10), als Bestandteil eines mindestens einen lokalen Sensor (1) vorzugsweise eine Mehrzahl von lokalen Sensoren (1) umfassendes Versorgungsnetzes zur Verteilung eines Verbrauchsguts, wobei
der Sensor (1) ein Messelement (9) enthält,
das Messelement (9) des jeweiligen Sensors (1) dazu eingerichtet ist, elementare Messeinheiten, die mindestens einer physikalischen oder physikalisch-chemischen Größe oder mindestens eines physikalischen oder physikalisch-chemischen Parameters entsprechen, als Rohmessdaten zu liefern,
der Sensor (1) Kommunikationsmittel (2) sowie Speichermittel (7) umfasst, wobei der Sensor (1) dazu eingerichtet ist,
zur Festlegung der Messauflösung des Sensors (1) die Bedingungen für ein Generieren von Zeitstempelungen (TS) unter Anwendung eines Korrelierungsmodells vorher festzulegen,
auf der Basis des Korrelierungsmodells Zeitstempelungen (TS) von aufeinanderfolgenden Rohmessdaten in dem Sensor (1) zu generieren,
die Zeitstempelungen (TS) über eine drahtgebundene Verbindung und/ oder über eine Funkstrecke zu übertragen, wobei
der Sensor (1) über eine primäre Kommunikationsstrecke (5) mit einem über eine tertiäre Kommunikationsstrecke (6) verbindbaren Datensammler (3) verbindbar ist, **dadurch gekennzeichnet, dass**
der Sensor (1) dazu eingerichtet ist,
Telegramme zur Kompensation des zeitlichen Versatzes zwischen dem Sensor (1) und dem Datensammler (3) oder dem Head-End (4) Telegramme zu senden, und
eine Mehrzahl von Zeitstempelungen (TS) entlang der primären Kommunikationsstrecke (5) jeweils als Datenpaket (17ᵢ, 17ᵢ₊ₙ) zu übertragen, Wobei ein Datenpaket jeweils mehrere Zeitstempelungen (TS1-TSn) enthält, und
die Festlegung, wann eine Datenübertragung durchzuführen ist, davon abhängig zu machen, ob eine vorgegebenen Menge an insbesondere komprimierten gesammelten Zeitstempelungen (TS) seit der vorherigen Datenübertragung erreicht ist.

26. Versorgungsnetz zur Verteilung eines Verbrauchsmediums mit
mindestens einem lokalen Sensor (1) vorzugsweise einer Mehrzahl von lokalen Sensoren (1) zum Generieren und/oder Weiterleiten von Zeitstempelungen (TS) von Rohmessdaten auf der Basis eines Korrelierungsmodells, vorzugsweise Rohmessdaten in Zusammenhang mit einem Verbrauch an Verbrauchsmedium, einem physikalischen oder physikalisch-chemischen Parameter und/oder einem Betriebszustand eines Verbrauchszählers (10),
einem Datensammler (3),
einer primären Kommunikationsstrecke (5) zwischen dem jeweiligen Sensor (1) und dem Datensammler (3),
einem Head-End (4) zur Auswertung der Daten, sowie
einer tertiären Kommunikationsstrecke (6) zwischen Datensammler (3) und Head-End (4), **dadurch gekennzeichnet, dass** als Sensor ein Sensor (1) nach Anspruch 25 vorgesehen ist.

## Claims

1. Method for collecting data in connection with a consumption, a physical or physico-chemical parameter and/or an operating state during operation of a local sensor (1), preferably a sensor (1) for a consumption meter (10), as part of a supply network which comprises at least one local sensor (1), preferably a plurality of local sensors (1), and is intended to distribute a consumable, wherein
the sensor (1) contains a measuring element (9),
the measuring element (9) of the respective sensor (1) provides elementary measuring units, which correspond to at least one physical or physico-chemical variable or at least one physical or physico-chemical parameter, as raw measurement data, and
the sensor (1) comprises radio communication means (2) and storage means (7), wherein
in order to determine the measurement resolution of the sensor (1), the conditions for generating time stamps (TS) are determined in advance using a correlation model,
time stamps (TS) of successive raw measurement data are generated in the sensor (1) on the basis of the correlation model,
the time stamps (TS) are transmitted via a wired connection and/or via a radio path, with the result that the raw measurement data acquired by the measuring element (9) are reconstructed and evaluated on the basis of the time stamps (TS) using the correlation model, and wherein
the sensor (1) is connected to a data collector (3) via a primary communication path (5),
a tertiary communication path (6) is provided between the data collector (3) and a head end (4), and
the time stamps (TS) transmitted by the sensor (1) are collected, stored and/or evaluated in the data collector (3) and/or in the head end (4), **characterized in that**
the temporal offset between the sensor (1) and the data collector (3) or the head end (4) is corrected by transmitting telegrams for compensating for the temporal offset, and
a plurality of time stamps (TS) are each transmitted as a data packet (17ᵢ, 17ᵢ₊ₙ) along the primary communication path (5), wherein a data packet respectively contains a plurality of time stamps (TS1-TSn), and
the determination of when a data transmission should be carried out by the sensor (1) depends on whether a predefined quantity of in particular compressed collected time stamps (TS) since the previous data transmission has been reached.

2. Method according to one of Claims 1, **characterized in that** a particular value, a particular value change or a particular value difference of the at least one physical or physico-chemical variable or the at least one physical or physico-chemical parameter is determined within the scope of the correlation model for the assignment of a time stamp (TS),
if the particular value, the particular value change or the particular value difference is captured by the measuring element (9), a time stamp (TS) is triggered and is stored in the storage means (7) of the sensor (1).

3. Method according to one of the preceding claims, **characterized in that** a gradually or incrementally increasing meter reading and/or a value table is/are represented by means of time stamps (TS) within the scope of the correlation model.

4. Method according to one of the preceding claims, **characterized in that** the time stamps (TS) are provided with a sign.

5. Method according to one of the preceding claims, **characterized in that** a raw measurement data stream (13) is generated on the basis of the time stamps (TS) arriving at the data collector (3) and/or at the head end (4) using the correlation model.

6. Method according to one of the preceding claims, **characterized in that** a unidirectional wired connection and/or a radio connection exists from the sensor (1) to the receiver.

7. Method according to one of the preceding claims, **characterized in that** the telegrams for compensating for the temporal offset are numbered consecutively.

8. Method according to one of the preceding claims, **characterized in that** an error value is calculated by means of the reception time of the telegrams for compensating for the temporal offset.

9. Method according to one of the preceding claims, **characterized in that** the periodicity of the telegrams for compensating for the temporal offset is known and the error value is calculated on the basis thereof.

10. Method according to one of the preceding claims, **characterized in that** the data collector (3) and/or the head end (4) receive(s) the telegrams for compensating for the temporal offset and determine(s) a temporal error on the basis of the temporal interval between telegrams for compensating for the temporal offset.

11. Method according to one of the preceding claims, **characterized in that** the data telegrams (17) are transmitted by the sensor (1) in an asynchronous manner with respect to the telegrams for compensating for the temporal offset.

12. Method according to one of the preceding claims, **characterized in that** the temporal transmission interval of the telegrams for compensating for the temporal offset differs from the temporal transmission interval of the time stamps (TS).

13. Method according to one of the preceding claims, **characterized in that** the time stamps are transmitted from the data collector (3) to the head end (4) together with the telegrams for compensating for the temporal offset, wherein provision is made, in particular, for the data collector (3) and/or the head end (4) to coordinate the telegrams for compensating for the temporal offset from a multiplicity of sensors (1) and to organize them according to the individual temporal error values.

14. Method according to one of Claims 1 to 10, **characterized in that** the time stamps (TS) are transmitted by the sensor (1) together with the telegrams for compensating for the temporal offset.

15. Method according to one of the preceding claims, **characterized in that** the temporal error between the sensor (1) and a standard time is determined on the basis of the difference between the transmission time of a telegram in the sensor (1) and the reception time of this telegram in the receiver, in particular in the data collector (3) and/or in the head end (4).

16. Method according to one of the preceding claims, **characterized in that** the raw measurement data stream (13) can be evaluated, in the further course of the data processing, on a time-historical basis without a time gap irrespective of the measurement resolution of the sensor (1) .

17. Method according to one of the preceding claims, **characterized in that** the elementary measuring units are the electrical voltage or the current intensity.

18. Method according to one of the preceding claims, **characterized in that** the measured physical variable relates to a supply medium, preferably water, electricity, fuel or gas, of a supply network, and/or the or one of the measured physical or chemico-physical parameter(s) is characteristic of the quantity, quality and/or composition of a fluid which flows through the relevant sensor (1) or with which contact is made by the latter.

19. Method according to one of the preceding claims, **characterized in that** the elementary measuring unit (9) generates a time stamp (TS) as soon as the elementary measuring unit (9) receives a pulse.

20. Method according to one of the preceding claims, **characterized in that** the raw measurement data stream (13) has a temporal resolution which is determined or conditioned by the sensor sampling rate or measuring element sampling rate or a multiple thereof, and/or the raw measurement data stream (13) is continuous and/or complete taking a continuous temporal resolution as a basis.

21. Method according to one of the preceding claims, **characterized in that** the determination of when a new data transmission should be carried out in the form of a message or a telegram depends on expiry of a predefined interval of time.

22. Method according to one of the preceding claims, **characterized in that** it comprises packaging the time stamps (TS) by formatting them in data packets (PAⱼ) of a predetermined fixed size, wherein, each time the accumulated data reach the size of a data packet (PAⱼ) or the predefined interval of time has expired, a new transmission is initiated.

23. Method according to one of the preceding claims, **characterized in that** the data transmission is carried out with redundancy, wherein the redundancy in the transmission is achieved, in particular, by repeatedly transmitting the same time stamps (TS) and/or repeatedly transmitting the same data packet (PAⱼ) in a plurality of successive transmission operations.

24. Method according to one of the preceding claims, **characterized in that** the time stamps (TS) are transmitted in compressed form, wherein provision is made, in particular, for the time stamps (TS) to be compressed and for the compression of the time stamps (TS) to be carried out in a loss-free manner or for the compression of the time stamps (TS) to be carried out with a predefined permissible loss level.

25. Sensor (1) for collecting data in connection with a consumption, a physical or physico-chemical parameter and/or an operating state during operation of a local sensor, preferably for a consumption meter (10), as part of a supply network which comprises at least one local sensor (1), preferably a plurality of local sensors (1), and is intended to distribute a consumable, wherein
the sensor (1) contains a measuring element (9),
the measuring element (9) of the respective sensor (1) is configured to provide elementary measuring units, which correspond to at least one physical or physico-chemical variable or at least one physical or physico-chemical parameter, as raw measurement data,
the sensor (1) comprises communication means (2) and storage means (7), wherein the sensor (1) is configured
in order to determine the measurement resolution of the sensor (1), to determine the conditions for generating time stamps (TS) in advance using a correlation model,
to generate time stamps (TS) of successive raw measurement data in the sensor (1) on the basis of the correlation model,
to transmit the time stamps (TS) via a wired connection and/or via a radio path, wherein
the sensor (1) can be connected to a data collector (3), which can be connected via a tertiary communication path (6), via a primary communication path (5), **characterized in that**
the sensor (1) is configured
to transmit telegrams telegrams for compensating for the temporal offset between the sensor (1) and the data collector (3) or the head end (4), and
to respectively transmit a plurality of time stamps (TS) as a data packet (17ᵢ, 17ᵢ₊ₙ) along the primary communication path (5), wherein a data packet respectively contains a plurality of time stamps (TS1-TSn), and
to make the determination of when a data transmission should be carried out dependent on whether a predefined quantity of in particular compressed collected time stamps (TS) since the previous data transmission has been reached.

26. Supply network for distributing a consumption medium having
at least one local sensor (1), preferably a plurality of local sensors (1), for generating and/or forwarding time stamps (TS) of raw measurement data on the basis of a correlation model, preferably raw measurement data in connection with a consumption of consumption medium, a physical or physico-chemical parameter and/or an operating state of a consumption meter (10),
a data collector (3),
a primary communication path (5) between the respective sensor (1) and the data collector (3),
a head end (4) for evaluating the data, and
a tertiary communication path (6) between the data collector (3) and the head end (4), **characterized in that** a sensor (1) according to Claim 25 is provided as sensor.

## Revendications

1. Procédé de collecte de données en relation avec une consommation, un paramètre physique ou physico-chimique et/ou un état de fonctionnement dans le cadre d'un fonctionnement d'un capteur local (1), de préférence d'un capteur (1) pour un compteur de consommation (10), en faisant partie d'un réseau d'alimentation comprenant au moins un capteur local (1), de préférence une pluralité de capteurs locaux (1), et destiné à distribuer un produit de consommation, dans lequel
le capteur (1) comporte un élément de mesure (9),
l'élément de mesure (9) du capteur (1) respectif fournit en tant que données de mesure brutes des unités de mesure élémentaires qui correspondent à au moins une grandeur physique ou physico-chimique ou à au moins un paramètre physique ou physico-chimique, et
le capteur (1) comprend des moyens de communication radio (2) ainsi que des moyens de stockage (7), dans lequel
pour définir la résolution de mesure du capteur (1), les conditions d'une génération d'horodatages (TS) en appliquant un modèle de corrélation sont prédéfinies,
des horodatages (TS) de données de mesure brutes consécutives sont générés dans le capteur (1) sur la base du modèle de corrélation,
les horodatages (TS) sont transmis par une liaison filaire et/ou par un trajet radio de sorte que sur la base des horodatages (TS) en appliquant le modèle de corrélation, les données de mesure brutes détectées par l'élément de mesure (9) sont restituées et évaluées, et dans lequel
le capteur (1) est en communication avec un collecteur de données (3) par un trajet de communication primaire (5),
un trajet de communication tertiaire (6) est prévu entre le collecteur de données (3) et une tête de réseau (4), et
les horodatages (TS) transmis par le capteur (1) sont collectés, stockés et/ou évalués dans le collecteur de données (3) et/ou dans la tête de réseau (4),
**caractérisé en ce que**
le décalage temporel entre le capteur (1) et le collecteur de données (3) ou la tête de réseau (4) est corrigé **en ce que** des télégrammes sont envoyés pour compenser le décalage temporel, et
une pluralité d'horodatages (TS) est transmise sur le trajet de communication primaire (5) respectivement sous forme de paquet de données (17ᵢ, 17ᵢ₊ₙ), un paquet de données comportant respectivement plusieurs horodatages (TS1-TSn), et
la définition à quel moment une transmission de données est à effectuer par le capteur (1) dépend du fait si une quantité prédéfinie d'horodatages (TS) collectés, en particulier comprimés, depuis la transmission de données précédente est atteinte.

2. Procédé selon l'une des revendications 1, **caractérisé en ce que** dans le cadre du modèle de corrélation, une valeur déterminée, un changement de valeur déterminé ou une différence de valeur déterminée de ladite au moins une grandeur physique ou physico-chimique ou du au moins un paramètre physique ou physico-chimique est défini(e) pour l'attribution d'un horodatage (TS),
lors d'une détection de la valeur déterminée, du changement de valeur déterminé ou de la différence de valeur déterminée par l'élément de mesure (9), un horodatage (TS) est déclenché et stocké dans les moyens de stockage (7) du capteur (1).

3. Procédé selon l'une quelconque des revendications précédentes, **caractérisé en ce que** dans le cadre du modèle de corrélation, une position de compteur augmentant progressivement ou de manière incrémentielle et/ou une table de valeurs sont représentées au moyen d'horodatages (TS).

4. Procédé selon l'une quelconque des revendications précédentes, **caractérisé en ce que** les horodatages (TS) sont signés.

5. Procédé selon l'une quelconque des revendications précédentes, **caractérisé en ce qu'**un flux de données de mesure brutes (13) est généré sur la base des horodatages (TS) arrivant au niveau du collecteur de données (3) et/ou de la tête de réseau (4) en appliquant le modèle de corrélation.

6. Procédé selon l'une quelconque des revendications précédentes, **caractérisé en ce qu'**il existe une liaison filaire et/ou une liaison radio unidirectionnelle(s) entre le capteur (1) et le récepteur.

7. Procédé selon l'une quelconque des revendications précédentes, **caractérisé en ce que** les télégrammes de compensation du décalage temporel sont numérotés.

8. Procédé selon l'une quelconque des revendications précédentes, **caractérisé en ce qu'**une valeur d'erreur est calculée à l'aide de l'heure de réception des télégrammes de compensation du décalage temporel.

9. Procédé selon l'une quelconque des revendications précédentes, **caractérisé en ce que** la périodicité des télégrammes de compensation du décalage temporel est connue, et la valeur d'erreur est calculée sur cette base.

10. Procédé selon l'une quelconque des revendications précédentes, **caractérisé en ce que** le collecteur de données (3) et/ou la tête de réseau (4) reçoivent les télégrammes de compensation du décalage temporel et établissent une erreur temporelle sur la base de la distance temporelle entre les télégrammes de compensation du décalage temporel.

11. Procédé selon l'une quelconque des revendications précédentes, **caractérisé en ce que** les télégrammes de données (17) sont envoyés par le capteur (1) de manière asynchrone par rapport aux télégrammes de compensation du décalage temporel.

12. Procédé selon l'une quelconque des revendications précédentes, **caractérisé en ce que** l'intervalle d'envoi temporel des télégrammes de compensation du décalage temporel et l'intervalle d'envoi temporel des horodatages (TS) sont différents.

13. Procédé selon l'une quelconque des revendications précédentes, **caractérisé en ce que** les horodatages sont envoyés avec les télégrammes de compensation du décalage temporel par le collecteur de données (3) à la tête de réseau (4), dans lequel il est prévu en particulier que le collecteur de données (3) et/ou la tête de réseau (4) cordonnent les télégrammes de compensation du décalage temporel d'une pluralité de capteurs (1) et les classent selon les valeurs d'erreur temporelles individuelles.

14. Procédé selon l'une quelconque des revendications 1 à 10, **caractérisé en ce que** les horodatages (TS) sont envoyés par le capteur (1) avec les télégrammes de compensation du décalage temporel.

15. Procédé selon l'une quelconque des revendications précédentes, **caractérisé en ce que** l'erreur temporelle entre le capteur (1) et une heure standard est déterminée sur la base de la différence entre l'instant d'envoi d'un télégramme dans le capteur (1) et l'instant de réception de ce télégramme dans le récepteur, en particulier dans le collecteur de données (3) et/ou dans la tête de réseau (4).

16. Procédé selon l'une quelconque des revendications précédentes, **caractérisé en ce que** le flux de données de mesure brutes (13) peut être évalué sans discontinuité temporelle dans la suite du traitement de données, mise à part la résolution de mesure du capteur (1), sur une base d'historique de temps.

17. Procédé selon l'une quelconque des revendications précédentes, **caractérisé en ce que** les unités de mesure élémentaires correspondent à la tension électrique ou à l'intensité de courant.

18. Procédé selon l'une quelconque des revendications précédentes, **caractérisé en ce que** la grandeur physique mesurée fait référence à un milieu d'alimentation, de préférence à l'eau, au courant, à un combustible ou à un gaz, d'un réseau d'alimentation, et/ou ledit ou l'un des paramètres physiques ou chimio-physiques mesurés est caractéristique de la quantité, de la qualité et/ou de la composition d'un fluide qui traverse le capteur (1) en question ou entre en contact avec celui-ci.

19. Procédé selon l'une quelconque des revendications précédentes, **caractérisé en ce que** l'unité de mesure élémentaire (9) génère un horodatage (TS) dès que l'unité de mesure élémentaire (9) reçoit une impulsion.

20. Procédé selon l'une quelconque des revendications précédentes, **caractérisé en ce que** le flux de données de mesure brutes (13) dispose d'une résolution temporelle qui est définie ou conditionnée par la fréquence d'échantillonnage du capteur ou la fréquence d'échantillonnage de l'élément de mesure ou un multiple de celles-ci, et/ou le flux de données de mesure brutes (13) est continu et/ou complet sur la base d'une résolution temporelle constante.

21. Procédé selon l'une quelconque des revendications précédentes, **caractérisé en ce que** la définition à quel moment une nouvelle transmission de données est à effectuer sous la forme d'un message ou d'un télégramme dépend de l'expiration d'un intervalle de temps prédéfini.

22. Procédé selon l'une quelconque des revendications précédentes, **caractérisé en ce qu'**il comprend le conditionnement des horodatages (TS) par formatage en paquets de données (PAⱼ) de taille fixe prédéterminée, dans lequel une nouvelle transmission est déclenchée chaque fois que les données accumulées atteignent la taille d'un paquet de données (PAⱼ) ou l'intervalle de temps prédéfini a expiré.

23. Procédé selon l'une quelconque des revendications précédentes, **caractérisé en ce que** la transmission de données est effectuée de manière redondante, dans lequel la redondance de la transmission est obtenue en particulier par un envoi répété des mêmes horodatages (TS) et/ou un envoi répété du même paquet de données (PAⱼ) dans plusieurs opérations de transmission consécutives.

24. Procédé selon l'une quelconque des revendications précédentes, **caractérisé en ce que** les horodatages (TS) sont transmis sous forme comprimé, dans lequel il est prévu en particulier que les horodatages (TS) soient comprimés, et la compression des horodatages (TS) soit effectuée sans perte, ou que la compression des horodatages (TS) soit effectuée avec un niveau de perte admissible prédéfini.

25. Capteur (1) de collecte de données en relation avec une consommation, un paramètre physique ou physico-chimique et/ou un état de fonctionnement dans le cadre d'un fonctionnement d'un capteur local, de préférence pour un compteur de consommation (10), en faisant partie d'un réseau d'alimentation comprenant au moins un capteur local (1), de préférence une pluralité de capteurs locaux (1), et destiné à distribuer un produit de consommation, dans lequel
le capteur (1) comporte un élément de mesure (9),
l'élément de mesure (9) du capteur (1) respectif est conçu pour fournir en tant que données de mesure brutes des unités de mesure élémentaires qui correspondent à au moins une grandeur physique ou physico-chimique ou à au moins un paramètre physique ou physico-chimique, et
le capteur (1) comprend des moyens de communication radio (2) ainsi que des moyens de stockage (7), le capteur (1) étant conçu pour
pour définir la résolution de mesure du capteur (1), prédéfinir les conditions d'une génération d'horodatages (TS) en appliquant un modèle de corrélation,
sur la base du modèle de corrélation, générer dans le capteur (1) des horodatages (TS) de données de mesure brutes consécutives,
transmettre les horodatages (TS) par une liaison filaire et/ou par un trajet radio, dans lequel
le capteur (1) peut être relié par un trajet de communication primaire (5) à un collecteur de données (3) pouvant être relié par un trajet de communication tertiaire (6),
**caractérisé en ce que** le capteur (1) est conçu pour
envoyer des télégrammes des télégrammes de compensation du décalage temporel entre le capteur (1) et le collecteur de données (3) ou la tête de réseau (4), et
transmettre une pluralité d'horodatages (TS) sur le trajet de communication primaire (5) respectivement sous la forme d'un paquet de données (17ᵢ, 17ᵢ₊ₙ), dans lequel un paquet de données comporte respectivement plusieurs horodatages (TS1-TSn), et
la définition à quel moment une transmission de données est à effectuer dépend du fait si une quantité prédéfinie d'horodatages (TS) collectés, en particulier comprimés, depuis la transmission de données précédente est atteinte.

26. Réseau d'alimentation permettant de distribuer un milieu de consommation, comprenant
au moins un capteur local (1), de préférence une pluralité de capteurs locaux (1), pour générer et/ou retransmettre des horodatages (TS) de données de mesure brutes sur la base d'un modèle de corrélation, de préférence des données de mesure brutes en relation avec une consommation d'un milieu de consommation, un paramètre physique ou physico-chimique et/ou un état de fonctionnement d'un compteur de consommation (10),
un collecteur de données (3),
un trajet de communication primaire (5) entre le capteur (1) respectif et le collecteur de données (3),
une tête de réseau (4) pour évaluer les données, et
un trajet de communication tertiaire (6) entre le collecteur de données (3) et la tête de réseau (4),
**caractérisé en ce qu'**un capteur (1) selon la revendication 25 est prévu comme capteur.
